(19) Europäisches Patentamt European Patent Office Office européen des brevets

(11) **EP 3 030 096 B1**

(12) **EUROPEAN PATENT SPECIFICATION**

(45) Date of publication and mention of the grant of the patent:
**13.02.2019 Bulletin 2019/07**

(21) Application number: **14753027.3**

(22) Date of filing: **31.07.2014**

(51) Int Cl.:
*A23L 3/3526* (2006.01)      *A23L 3/3535* (2006.01)
*A23L 3/3571* (2006.01)      *A23B 5/14* (2006.01)
*A23B 5/16* (2006.01)      *A23B 5/18* (2006.01)
*A23C 3/08* (2006.01)      *A23L 3/358* (2006.01)

(86) International application number:
**PCT/EP2014/066524**

(87) International publication number:
**WO 2015/018739 (12.02.2015 Gazette 2015/06)**

(54) **ANTIMICROBIAL COMPOSITIONS AND USE THEREOF IN FOOD PRESERVATION**

ANTIMIKROBIELLE ZUSAMMENSETZUNGEN UND IHRE VERWENDUNG IN DER LEBENSMITTELKONSERVIERUNG

COMPOSITIONS ANTIMICROBIENNES ET LEUR UTILISATION DANS LA CONSERVATION DES ALIMENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2013 EP 13179460**

(43) Date of publication of application:
**15.06.2016 Bulletin 2016/24**

(73) Proprietor: **Bienca N.V.**
**9000 Gent (BE)**

(72) Inventors:
• **VAN TORNOUT, Philippe**
**B-9890 Berlare (BE)**
• **DECATELLE, Johan**
**B-9840 De Pinte (BE)**

(74) Representative: **De Clercq, Ann G. Y. et al**
**De Clercq & Partners**
**Edgard Gevaertdreef 10a**
**9830 Sint-Martens-Latem (BE)**

(56) References cited:
EP-A1- 0 518 445      WO-A1-00/69267
WO-A1-91/11105      WO-A2-2011/116052
CA-A1- 1 087 019      FR-A1- 2 709 401
GB-A- 1 468 405      US-A- 5 085 873
US-A- 5 206 156      US-A- 5 747 078

• **EARNSHAW R G ET AL: "The preservation of Cottage cheese by an activated lactoperoxidase system.", FOOD MICROBIOLOGY 1989 CAMPDEN FOOD & DRINK RES. ASS., CHIPPING CAMPDEN GL55 6LD, UK, vol. 6, no. 4, 1989, page 285, XP002715947,**
• **POPPER L ET AL: "Inactivation of yeast and filamentous fungi by the lactoperoxidase-hydrogen peroxide-thiocyanate-system", NAHRUNG, vol. 41, no. 1, 1997, pages 29-33, XP002715945, ISSN: 0027-769X**
• **GRIEVE P A ET AL: "In vitro antibacterial activity of the lactoperoxidase system towards enterotoxigenic strains of Escherichia coli", JOURNAL OF VETERINARY MEDICINE SERIES B, vol. 39, no. 7, 1992, pages 537-545, XP002715944, ISSN: 0931-1793**
• **DIONYSIUS D A ET AL: "Studies on the Lactoperoxidase System: Reaction Kinetics and Antibacterial Activity Using Two Methods for Hydrogen Peroxide Generation", JOURNAL OF APPLIED BACTERIOLOGY, BLACKWELL PUBLISHING LTD., OXFORD, GB, vol. 72, no. 2, 1 January 1992 (1992-01-01), pages 146-153, XP003010898, ISSN: 0021-8847**

- **ISHIDO TAKUYA ET AL: "Continuous supply of OSCN- ions by lactoperoxidase system developed from lactose as the primary substrate and its antibacterial activities", MILCHWISSENSCHAFT, VV GMBH VOLKSWIRTSCHAFTLICHER VERLAG. MUNCHEN, DE, vol. 66, no. 1, 1 January 2011 (2011-01-01), pages 76-80, XP009151117, ISSN: 0026-3788**

- **BJOERCK L ET AL: "Antibacterial activity of the lactoperoxidase system in milk against pseudomonads and other gram-negative bacteria", APPLIED MICROBIOLOGY, AMERICAN SOCIETY FOR MICROBIOLOGY, US , vol. 30, no. 2 1 August 1975 (1975-08-01), pages 199-204, XP008165566, ISSN: 0003-6919 Retrieved from the Internet: URL:http://aem.asm.org/content/30/2/199.ab stract [retrieved on 2013-11-14]**

**Description**

**FIELD OF THE INVENTION**

The present invention relates to antimicrobial compositions which can be used in food preservation. The compositions according to the invention are based on the lactoperoxidase system, and comprise besides lactoperoxidase also glucose oxidase, thiocyanate, and optionally glucose. The invention further relates to the use of such compositions in food preservation, methods for food preservation, and food products comprising these compositions.

**BACKGROUND OF THE INVENTION**

Food spoilage is a consequence of a variety of natural processes which inevitably occur over time when storing food products. Food spoilage is generally characterized by deterioration of the organoleptic appreciation or quality of the food product, often to a greater or lesser extent associated with health risks for the consumer. Both intrinsic and extrinsic factors affecting a diverse array of physicochemical processes and properties of food products contribute to food spoilage. One major source of food spoilage results from microbial contamination of food products, such as bacterial, viral and mold or yeast contaminations. While general hygienic precautions may aid in prolonging food product shelf life, often one or more food preserving measures need to be taken in order to guarantee optimal food quality and safety.

A large variety of methods are known in the art to preserve food products and hence to extend shelf life. Generally speaking, such preservation methods discern both physical as well as chemical methods, and combinations thereof. Well known food preservation techniques include heat treatments, such as sterilization or pasteurization, cold treatments, such as refrigeration or freezing, irradiation, reduction of water activity, such as by drying or curing (e.g. by adding salts or sugars), smoking, vacuum storage or storage under controlled/modified atmosphere, acid (e.g. pickling) or alkaline (e.g. lye) treatments, reduction of redox potential (e.g. anti-oxidants), or addition of a variety of artificial or natural food additives fulfilling a function as preservative or having antimicrobial effects.

Many food preservation methods have several disadvantages, among which the cost price for achieving efficient preservation is one of them. For instance, physical preservation techniques, such as refrigeration or freezing requires often quite extensive (and expensive) cooling equipment, which may not even be available everywhere. Also heat treatments require substantial energy input, whereas irradiation methods may present themselves with increased security and health risks, apart from being costly. Chemical preservation techniques may sometimes provide a cheaper alternative to many physical preservation techniques, as many preservation constituents are readily available. It is however well known that the extrinsic addition of many food preservatives may have profound effects on the organoleptic properties of the treated food product. While for instance the addition of salts or sugar if added in large quantities may dramatically impact the taste of a food product, also minor variations in taste, appearance, or smell of food products by a variety of additives (i.e. preservatives) having less dominant organoleptic effects may nevertheless be undesirable. Furthermore, public appreciation of artificial food preservatives is rapidly declining in the sense that many people nowadays prefer food products with less or no non-natural occurring ingredients.

Lactoperoxidase is (LP) is a basic glycoprotein that contains a heme group. As with peroxidases generally, LP catalyses reactions in which hydrogen peroxide is reduced and a suitable electron donor is oxidized. LP occurs naturally in several biological fluids or secretions, such as mammary, salivary, and other mucosal gland secretions. LP can also be found in substantial quantities in for instance bovine milk. LP itself has no antibacterial effect but in combination with certain substrates, thiocyanate ($SCN^-$) and hydrogen peroxide ($H_2O_2$), forms a potent antimicrobial system, collectively called the lactoperoxidase system (LPS).

It is well known that hydrogen peroxide forms a complex with LP; this complex oxidizes thiocyanate ($SCN^-$) to sulphate, carbon dioxide, ammonia, and water via an unstable intermediate oxidation product that is inhibitory to some bacteria, but kills other bacteria including some pathogens (i.e. bactericidal effect). Many Gram-positive bacteria such as *Lactococcus* sp and *Lactobacillus* sp are inhibited while many gram-negative bacteria such as *Escherichia coli, Pseudomonas* sp, *Salmonella* sp are killed. It appears likely that the antimicrobial effects are due to oxyacids of thiocyanate e.g. $OSCN^-$.

In milk, the LPS can be "activated" by addition of hydrogen peroxide or an appropriate hydrogen peroxide source, possibly supplemented with thiocyanate, although the latter is also endogenously present in milk. The use of LPS for preserving milk therefore essentially relies on the action of LP which is endogenously present in the milk, to which one or more additional components of the LPS are added. GB1468405 for instance describes the addition of glucose and glucose oxidase, which together result in hydrogen peroxide generation, to milk in order to activate the LPS and thereby prolong milk storage life.

Earnshaw et al. (Food Microbiology, 6(4):285) disclose the preservation of cottage cheese by an activated lactoperoxidase system having high amounts of LP, SCN-, and/or glucose added.

Popper et al. (Nahrung; 41(1):29-33) disclose apple juice comprising high amounts of LP, GOD, thiocyanate, and/or glucose for inactivating filamentous fungi.

Grieve at al. (J Veterinary Medicine; 39(7):537-45) disclose in vitro antibacterial activity of the lactoperoxidase system comprising high amounts of glucose and thiocyanate.

US 5,747,078 and EP 0 518 445 disclose an immobilized lactoperoxidase composition comprising high amounts of glucose for long-term release of hydrogen peroxide.

US 5,085,873 discloses surface treatment of non-liquid food products with a lactoperoxidase system comprising specific amounts of LP and GOD.

WO 00/69267 discloses a lactoperoxidase system comprising high amounts of thiocyanate in combination with antimicrobial fatty acids.

FR 2 709 401 discloses a combination of sodium chloride and lactoperoxidase system composition without GOD or glucose for surface or bulk treatment of food products.

GB 1 468 405 discloses a lactoperoxidase system composition without LP or thiocyanate, and with high amounts of glucose, for improving or keeping milk quality.

Dionysius et al. (J Applied Bacteriology; 72(2):146-53) disclose the reaction kinetics of the lactoperoxidase system having high amounts of glucose.

WO 2011/116052 discloses an enhanced lactoperoxidase system composition without LP and having high amounts of glucose, for treatment of milk products.

Ishido et al. (Milchwissenschaft 66(1):76-80) disclose a lactoperoxidase system developed from lactose as the primary substrate, wherein the composition having high amounts of thiocyanate.

Bjoerck et al. (Applied Microbiology; 30(2):199-204) antibacterial activity of the lactoperoxidase system in milk with a composition comprising no LP and high amounts of glucose

CA 1,087,019 discloses lactoperoxidase treatment of a food product with an activation composition that does not comprise LP and has high amounts of glucose.

US 5,206,156 discloses a particulate product comprising specific amounts of LP and GOD, wherein LP is bonded to a particulate carrier.

WO 91/11105 discloses a lactoperoxidase composition having specific amounts of LP, GOD, thiocyanate, and glucose, for use in oral hygene, deodorants, and anti-dandruff products.

It has been found however, that for instance the addition of glucose oxidase may lead to taste aberrations. Also the extension of shelf life of food products may not be entirely satisfactory using the LPS as currently known. Therefore, there remains a need in the art to further improve the LPS, in particular for use in the food industry - not limited to milk products, in order to guarantee optimal preservation capability, thereby safeguarding food product quality and safety, with no or minimal effect on taste or other properties, for instance other organoleptic properties, while at the same time significantly extending shelf life.

## SUMMARY OF THE INVENTION

Unwanted microbial proliferation in food leads first to deterioration, later to spoilage by decay. This is why the shelf life of a product does not necessarily equate to its freshness, and cannot be determined by assessing the time to spoilage alone. It is equally important to consider the gradual deterioration in looks, smell, texture and taste that occurs long before spoilage. The inventors have surprisingly found that these and the above described objectives can be met by applying to food products a composition having specific concentrations of the LPS constituents. Accordingly, in a first aspect, the invention relates to a composition comprising

    (i) 1125-31875 U /100 g glucose oxidase (GOD), preferably 1500-25500 U/100 g GOD;
    (ii) 30000-1562500 U /100 g lactoperoxidase (LP), preferably 40000-1250000 U/100 g LP;
    (iii) 1.275-6.25 wt% thiocyanate (SCN), preferably 1.7-5.0 wt% SCN; and
    (iv) up to 37.5 wt% glucose, preferably up to 30 wt% glucose.

Unexpectedly, it has been found that compositions having these concentrations, as well as these ratios, of LPS components when applied to food products not only achieve significant improvements in storage life of a variety of food products, but do so without inflicting substantial taste, texture, appearance, and/or other organoleptic deviations. Furthermore, the well-defined compositions as described herein allow for uniform applications and results with minimal variability in effectiveness. Moreover, the components of the LPS are natural components, such that addition of the LPS compositions as described herein does not entail supplementation of food products with artificial food preservatives. The compositions according to the invention are effective both at extending shelf life of food, as well as protecting its freshness for longer. In this context, these compositions are both capable of acting as bacteriostatic and as bactericide, although the action is not limited to bacterial contaminations, but also includes other microorganisms, such as yeasts and molds.

In an embodiment, the composition comprises 0.075-2.125 wt% GOD, preferably 0.1-1.7 wt% GOD, and 0.03-1.57 wt% LP, preferably 0.04-1.25 wt% LP.

In another embodiment, the composition comprises at least 0.5 wt% glucose.

In a further embodiment, the composition is a dry composition, preferably a powder.

In another embodiment, the composition is an edible composition.

In another aspect, the invention relates to a composition as described herein as food preservative.

In an embodiment, said food is selected from dairy products, fruit and vegetable juices, sauces, dressings, pastes, (liquid) egg products, cheeses, and salads.

In a further aspect, the invention relates to a food product comprising the composition as described herein, wherein said food product is selected from dairy products, fruit and vegetable juices, sauces, dressings, pastes, (liquid) egg products, cheeses, and salads.

In an embodiment, said food product comprises 50-400 ppm of the composition as described herein, preferably 250-350 ppm, most preferably 300 ppm.

In another aspect, the invention relates to a food product, having added per 100 g of said food product:

(i) 0.056-12.75 U GOD, preferably 0.45-7.65 U GOD;
(ii) 1.5-625 U LP, preferably 12-375 U LP;
(iii) 0.063-2.5 mg SCN-, preferably 0.51-1.5 mg SCN; and
(iv) 0-15 mg glucose, preferably 0-9 mg glucose.

In an embodiment, said food product has added per 100 g of said food product 0.0037-0.85 mg GOD, preferably 0.03-0.51 mg GOD, and 0.0015-0.625 mg LP, preferably 0.012-0.375 mg LP.

In a further aspect, the invention relates to a method for preserving a food product, comprising adding 50-400 ppm, preferably 250-350 ppm, most preferably 300 ppm of the composition as described herein to a food product or a constituent of a food product.

In an embodiment, said method comprises adding 50-400 ppm, preferably 250-350 ppm, most preferably 300 ppm of the composition as described herein to a food product or a constituent of a food product and subjecting said food product or said constituent to heat treatment after between 1 to 12 hours, preferably after between 4 to 8 hours.

In an embodiment, said heat treatment is pasteurization.

In an embodiment, said food product is selected from dairy products, fruit and vegetable juices, sauces, dressings, pastes, (liquid) egg products, cheeses, and salads.

The inventors have surprisingly found that the compositions according to the invention act synergistically with heat treatment to obtain antimicrobial effects, such as for instance bactericidal and/or bacteriostatic effects. The application of heat treatment after between 1-12 hours of treatment with the composition as defined herein is particularly advantageous and increases the synergistic effects between the compositions according to the invention and the heat treatment.

## BRIEF DESCRIPTION OF THE FIGURES

**Figure 1:** Cell count (log cfu/ml) of *L. monocytogenes* inoculated in milk and stored at 7°C according to an embodiment of the invention.

**Figure 2:** Cell count (log cfu/ml) of *L. brevis* inoculated in milk and stored at 7°C according to different embodiments of the invention (LPS1, LPS2, LPS3, and LPS4 each at 300 ppm).

**Figure 3:** Cell count (log cfu/ml) of *E. coli* O157:H7 inoculated in milk and stored at 7°C according to an embodiment of the invention.

**Figure 4:** Growth of lactic acid bacteria in dressings (with or without LPS) at 22°C

**Figure 5:** Evolution of pH in dressings (with or without LPS) according to an embodiment of the invention.

**Figure 6:** Effect of LPS on the evolution of the cell count (log cfu/ml) of *Salmonella* spp. inoculated in whole liquid egg stored 8h at 7°C and then pasteurized at 55°C according to an embodiment of the invention.

**Figure 7:** Total aerobic psychrotrophic (incubation at 22°C) cell count (log cfu/ml) in milk stored for 8h at 7°C as influenced by addition of LPS added before pasteurization (72°C for 15 sec) according to an embodiment of the invention.

**Figure 8:** Total anaerobic psychrotrophic (incubation at 22°C) cell count (log cfu/ml) in milk stored for 8h at 7°C as influenced by addition of LPS added before pasteurization (72°C for 15 sec) according to an embodiment of the invention.

**Figure 9:** Total aerobic psychrotrophic (incubation at 22°C) cell count (log cfu/ml) in raw milk in which LPS was added according to an embodiment of the invention. After addition, the milk was stored for 4h at 7°C after which it was pasteurized (72°C for 15sec). The milk was further stored at 12°C during 7 days.

**Figure 10:** Total anaerobic psychrotrophic (incubation at 22°C) cell count (log cfu/ml) in raw milk in which LPS was added according to an embodiment of the invention. After addition, the milk was stored for 4h at 7°C after which it was pasteurized (72°C for 15sec). The milk was further stored at 12°C during 7 days.

**Figure 11:** The cell count of lactic acid bacteria (log cfu/ml) in raw milk in which LPS was added at different concentrations according to an embodiment of the invention. After addition, the milk was stored for 8h at 7°C after which it was pasteurized (72°C for 15sec). The milk was further stored at 12°C during 7 days.

**Figure 12:** The cell count of aerobic psychrotrophic bacteria (log cfu/ml) in raw milk in which LPS was added at different concentrations according to an embodiment of the invention. After addition, the milk was stored for 8h at 7°C after which it was pasteurized (72°C for 15sec). The milk was further stored at 12°C during 7 days.

**Figure 13:** Effect of LPS on the evolution of the cell count (log cfu/ml) of *Salmonella* spp. inoculated in whole liquid egg stored 8h at 7°C and then pasteurized at 55°C.

**Figure 14:** Effect of LPS on the evolution of the total aerobic psychrotrophic cell count (log cfu/ml; incubation at 22°C) in surimi salad, inoculated with lactic acid bacteria, stored at 7°C.

**Figure 15:** Effect of LPS on the evolution of the total anaerobic psychrotrophic cell count (log cfu/ml; incubation at 22°C) in surimi salad, inoculated with lactic acid bacteria, stored at 7°C.

**Figure 16:** Effect of LPS on the evolution of cell count (log cfu/ml) of lactic acid bacteria (incubation at 22°C) in surimi salad, inoculated with lactic acid bacteria, stored at 7°C.

## DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of", as well as the terms "consisting essentially of", "consists essentially" and "consists essentially of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-20% or less, preferably +/-10% or less, more preferably +/-5% or less, and still more preferably +/-1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the following detailed description of the invention, reference is made to the accompanying drawings that form a part hereof, and in which are shown by way of illustration only of specific embodiments in which the invention may be practiced. It is to be understood that other embodiments may be utilised and structural or logical changes may be made without departing from the scope of the present invention. The following detailed description, therefore, is not to be taken in a limiting sense, and the scope of the present invention is defined by the appended claims.

According to one aspect, the invention relates to a composition, such as antimicrobial composition or food preservative, comprising, consisting essentially of, or consisting of:

(i) 1125-31875 U /100 g glucose oxidase (GOD), preferably 1500-25500 U/100 g GOD;
(ii) 30000-1562500 U /100 g lactoperoxidase (LP), preferably 40000-1250000 U/100 g LP;
(iii) 1.275-6.25 wt% thiocyanate (SCN), preferably 1.7-5.0 wt% SCN; and
(iv) up to 37.5 wt% glucose, preferably up to 30 wt% glucose.

In an embodiment, this composition comprises between 0.075 and 2.125, preferably between 0.1 and 1.7 wt% GOD. In another embodiment, this composition comprises between 0.03 and 1.57 wt% LP, preferably between 0.04 and 1.25 wt% LP. In a preferred embodiment, this composition comprises 0.075-2.125 wt% GOD, preferably 0.1-1.7 wt% GOD, and 0.03-1.57 wt% LP, preferably 0.04-1.25 wt% LP.

According to another aspect, the invention relates to a composition, such as antimicrobial composition or food preservative, comprising, consisting essentially of, or consisting of:

(i) 0.075-2.125 wt% glucose oxidase (GOD), preferably 0.1-1.7 wt% GOD;
(ii) 0.03-1.57 wt% lactoperoxidase (LP), preferably 0.04-1.25 LP;
(iii) 1.275-6.25 wt% thiocyanate (SCN), preferably 1.7-5.0 wt% SCN; and
(iv) up to 37.5 wt% glucose, preferably up to 30 wt% glucose.

Particularly preferred compositions as described above are detailed below and comprise:

- 0.5-1.0 wt%, preferably 0.75 wt% GOD; 1.0-1.5 wt%, preferably 1.25 wt% LP; 3-7 wt%, preferably 5 wt% SCN; 25-35 wt%, preferably 30 wt% glucose; or
- 0.5-1.0 wt%, preferably 0.75 wt% GOD; 1.0-1.5 wt%, preferably 1.25 wt% LP; 1.4-2 wt%, preferably 1.7 wt% SCN; 15-25 wt%, preferably 20 wt% glucose; or
- 1.4-2 wt%, preferably 1.7 wt% GOD; 0.03-0.05 wt%, preferably 0.04 wt% LP; 1.4-2 wt%, preferably 1.7 wt% SCN; less than 1 wt%, preferably 0 wt% glucose.

In an embodiment, the compositions as described herein comprise at least 0.05 wt% glucose, preferably at least 0.1 wt% glucose, such as for instance 0.05, 0.1, 0.2, 0.3, 0.4, 0.5, 1, 2, 3, 4, 5, 7, 10, 15, 20, 25, 30, or 35 wt% glucose. In an embodiment, the compositions as described herein comprise between 0.05 and 37.5 wt% glucose, preferably between 0.1 and 35 wt% glucose.

Glucose oxidase ($\beta$-D-glucose:oxygen 1-oxidoreductase; GOD) is an oxidoreductase that catalyzes the oxidation of glucose, in particular $\beta$-D-giucose, to hydrogen peroxide and D-glucono-$\delta$-lactone. In view hereof, when referring to glucose herein, although not exclusively, preferably $\beta$-D-glucose is meant. As used herein, the term glucose oxidase refers to functional glucose oxidase, dimer and including the required redox cofactor (e.g. FAD), i.e. glucose oxidase having detectable catalytic activity. GOD may be obtained from a variety of microbial and non-microbial sources, among which isolated from *Penecillium* sp., *Asperegillus* sp. (in particular *Asperegillus niger*) and *Saccharomyces* sp, or recombinantly obtained. In a preferred embodiment, GOD is obtained from *Asperegillus niger,* preferably fermentatively obtained. Preferably, GOD has an activity of between 10000 and 20000 U/g, more preferably 15000 U/g or about 15000 U/g. As defined herein, one unit of GOD is the enzyme quantity (mg) which oxidises one $\mu$mole of $\beta$-D-glucose per minute, as measured by absorption difference at 500 nm at 37°C and pH 7. In a preferred embodiment, the GOD activity as described herein is between 10 and 20 U/mg GOD, most preferably 15 U/mg GOD or about 15 U/mg GOD. In an embodiment, GOD can be obtained from Amano Enzyme Inc.

Lactoperoxidase (hydrogen peroxide oxidoreductase; LP) is a member of the heme peroxidase family of enzymes and catalyzes the oxidation of a number of inorganic and organic substrates by hydrogen peroxide. As used herein, the term lactoperoxidase refers to functional lactoperoxidase, including the required heme cofactor, i.e. lactoperoxidase having detectable catalytic activity. LP may be obtained from a variety of microbial and non-microbial sources, among which isolated from bovine milk, or recombinantly obtained. Preferably, LP has an activity of between 500000 and 1500000 U/g, more preferably 1000000 U/g or about 1000000 U/g. As defined herein, one unit of LP is the initial increase in absorbance (A412), per minute, caused by the oxidation of ABTS (2,2'-azinobis(3-ethylbenzothiazoline-6-

# EP 3 030 096 B1

sulfonic acid)) at pH 5.0 and 37°C, expressed per mg of lactoperoxidase sample. In a preferred embodiment, the LP activity as described herein is between 500 and 1500 U/mg LP, most preferably 1000 U/mg LP or about 1000 U/mg LP. In an embodiment, LP can be obtained from Amano Enzyme Inc.

Thiocyanate, also known as cyanosulfanide or SCN⁻, is the conjugate base of thiocyanic acid. Thiocyanate is an anion. The compositions according to the invention may comprise the thiocyanate anion, but may also comprise a thiocyanate salt, preferably potassium thiocyanate or sodium thiocyanate, most preferably sodium thiocyanate. In a preferred embodiment, the compositions as described herein comprise a thiocyanate salt. The concentrations or amounts of thiocyanate as specified herein, preferably refer to the concentrations or amounts of the thiocyanate salt, preferably the sodium thiocyanate salt.

It is to be understood that when referring to wt%, such is to be seen as a concentration determined as the amount of a component in gram per 100 gram of composition comprising such component (i.e. wt/wt%). Further, when referring to ppm (parts per million), such is likewise based on weight. For instance, 100 ppm equals 0.01 wt%, or 100 mg/kg.

As used herein, a composition consisting essentially of the LPS components GOD, LP, SCN⁻, and optionally glucose as described above, refers to a composition which does not contain additional active ingredients. In particular, such composition does not contain further enzymes or substrates which catalyze, lead to, generate or aid in the generation of OSCN⁻. Such composition also does not contain further antimicrobial ingredients, or at least does not contain further ingredients which function as antimicrobial ingredients at the concentration in which these are present in the composition. Examples of such ingredients include, but are not limited to halogen ions, such as for instance iodide or bromide, lactoferrin, lysozyme, peroxidases other than LP (e.g. myeloperoxidase), oxidoreductases other than GOD which result in the generation of hydrogen peroxide (e.g. galactose oxidase), antibiotics, etc.

In an embodiment, the invention relates to a composition as described herein, further containing one or more (inert) excipients or (inert) fillers or carriers. As used herein, the term inert in the context of further components refers to components which do not possess or otherwise influence the antimicrobial action of the LPS components in the compositions as described herein. The excipients or fillers are thus neutral with respect to the antimicrobial action of the compositions as described herein. In a preferred embodiment, the compositions as describe herein further comprise saccharose.

The compositions as described herein essentially are antimicrobial compositions. When referring to the antimicrobial action of the compositions as described herein, it is to be understood that such action may comprise both the prevention or delay of microbial propagation (i.e. promote microbial stasis), as well as in the alternative or in addition the killing of microorganisms. The antimicrobial action may render microorganisms incapable of multiplying, absorbing nutrients or releasing metabolites. By means of example, the antimicrobial action as referred to herein may be bacteriostatic and/or bactericidal. It is to be understood that, when referring to a food preservative as described herein, such food preservative is to be seen as an antimicrobial composition.

Accordingly, in an embodiment, the invention relates to a bacteriostatic and/or bactericidal composition comprising, consisting essentially of, or consisting of:

    (i) 1125-31875 U /100 g glucose oxidase (GOD), preferably 1500-25500 U/100 g GOD;
    (ii) 30000-1562500 U /100 g lactoperoxidase (LP), preferably 40000-1250000 U/100 g LP;
    (iii) 1.275-6.25 wt% thiocyanate (SCN), preferably 1.7-5.0 wt% SCN; and
    (iv) up to 37.5 wt% glucose, preferably up to 30 wt% glucose.

In an embodiment, this composition comprises between 0.075 and 2.125, preferably between 0.1 and 1.7 wt% GOD. In another embodiment, this composition comprises between 0.03 and 1.57 wt% LP, preferably between 0.04 and 1.25 wt% LP. In a preferred embodiment, this composition comprises 0.075-2.125 wt% GOD, preferably 0.1-1.7 wt% GOD, and 0.03-1.57 wt% LP, preferably 0.04-1.25 wt% LP.

According to another embodiment, the invention relates to a bacteriostatic and/or bactericidal composition comprising, consisting essentially of, or consisting of:

    (i) 0.075-2.125 wt% glucose oxidase (GOD), preferably 0.1-1.7 wt% GOD;
    (ii) 0.03-1.57 wt% lactoperoxidase (LP), preferably 0.04-1.25 LP;
    (iii) 1.275-6.25 wt% thiocyanate (SCN), preferably 1.7-5.0 wt% SCN; and
    (iv) up to 37.5 wt% glucose, preferably up to 30 wt% glucose.

The antimicrobial action of the compositions as described herein is directed to a variety of bacteria, both gram positive and gram negative bacteria, viruses, yeasts, and molds. In a preferred embodiment, the antimicrobial action of the compositions as described herein is directed to bacteria, both gram positive and gram negative bacteria. Accordingly, in an aspect, the invention relates to the use of the compositions as described herein for killing and/or inhibiting growth and/or propagation of microbial species as defined below.

By means of example, and without limitation, the compositions as described herein are effective against the following bacteria: *Acinetobacter* species, *Aeromonas hydrophila, Bacillus brevis, Bacillus cereus, Bacillus megaterium, Bacillus subtilis, Burkholderia cepacia, Campylobacter jejuni, Capnocytophaga ochracea, Corynebacterium xerosis, Enterobacter cloacae, Escherichia coli, Haemophilus influenzae, Helicobacter Pylori, Klebsiella oxytoca, Klebsiella pneumoniae, Legionella, Listeria monocytogenes, Micrococcus luteus, Mycobacterium smegmatis, Mycobacterium abscessus, Neisseria* species, *Pseudomonas aeruginosa, Pseudomonas pyocyanea, Salmonella* species, *Selenomonas sputigena, Shigella sonnei, Staphylococcus aerogenes, Staphylococcus aureus, Streptococcus agalactiae, Streptococcus faecalis, Streptococcus mutans, Wolinella recta, Xanthomonas campestris, Yersinia enterocolitica.*

By means of example, and without limitation, the compositions as described herein are effective against the following viruses: Herpes simplex virus, Immunodeficient virus, Respiratory Syncytial virus, Echovirus 11, Influenza virus.

By means of example, and without limitation, the compositions as described herein are effective against the following yeasts and molds: *Candida albicans, Aspergillus niger, Colletotrichum musae, Colletotrichum gloeosporioide, Botryodiplodia theobromae, Fusarium monoliforme, Fusarium oxysporum, Rhodotula rubra, Byssochlamys fulva, Sclerotinia.*

The antimicrobial action as described herein, such as bacteriostatic or bactericidal effects, as well as the food preserving capacity of the compositions as described herein, can be determined directly or indirectly by techniques known in the art. By means of example, plate counts can be performed in which microbial evolution can be monitored over time (e.g. colony forming units (CFU) of microorganisms per quantity of food product). The antimicrobial activity as described herein may also be indirectly quantified by measuring the generation (concentration or concentration evolution) of the effective antimicrobial product hypothiocyanate ($OSCN^-$) which is generated through the action of the LPS. The concentration of $OSCN^-$ can be directly correlated with the antimicrobial effect. $OSCN^-$ can be measured by techniques known in the art, such as colorimetric assays (e.g. Nbs assay, based on oxidation of coloured (5,5)-dithiobis-2-nitrobenzoic acid (Nbs) to colourless $(Nbs)_2$ by $OSCN^-$ ions).

In an embodiment, the invention relates to compositions or the use thereof as described herein, wherein said composition prevents, delays and/or inhibits microbial propagation and/or growth, preferably propagation and/or growth of the microorganisms as described herein elsewhere. In an embodiment, the compositions as described herein prevent, delay or inhibit microbial growth by at least 10%, preferably by at least 20%, 30%, 40%, 50%, 60%, 70%, 80%, 90%, 100%, or more, such as more preferably 200%, 300%, 400%, 500% or more, compared to the propagation and/or growth without the composition as defined herein added. As used herein, preventing, delaying or inhibiting microbial growth by a certain percentage refers to the increase in time to reach a particular microbial concentration (e.g. CFU/ml or CFU/g). For instance, a delay of 10% means that it takes 10% of time longer to reach a particular microbial concentration. This embodiment refers for instance to the microbistatic effects, such as bacteriostatic effects of the compositions as described herein.

In a further embodiment, the invention relates to compositions or the use thereof as described herein, wherein said composition kills microorganisms, preferably the microorganisms as described herein elsewhere. In an embodiment, the compositions as described herein kill at least 10%, preferably by at least 20%, 30%, or 40%, more preferably at least 50%, 60%, or 70%, most preferably at least 80% or 90%, such as 95, 96, 97, 98, 99% or more. This embodiment refers for instance to the microbicidal effects, such as bactericidal effects of the compositions as described herein.

In an embodiment, the invention relates to a composition as described herein, wherein the ratio between LP and GOD (both expressed in units) is between 1:1 and 1000:1, preferably between 1.5:1 and 850:1, such as between 2:1 and 700:1, between 5:1 and 300:1, or between 10:1 and 100:1, more preferably between 20:1 and 75:1, even more preferably between 25:1 and 50:1, such as 30:1, 35:1, 40:1, or 45:1.

In another embodiment, the invention relates to a composition as described herein, wherein the ratio between GOD and LP (both expressed in mg) is between 1:30 and 100:1, preferably between 1:20 and 70:1, such as between 1:10 and 50:1, between 1:5 and 20:1, between 1:3 and 10:1, or between 1:2 and 5:1, more preferably between 1:1 and 3:1, even more preferably between 1.35:1 and 2.5:1, such as 1.4:1, 1.6:1, 1.8:1, 2.0:1, 2.2:1, or 2.4:1.

In another embodiment, the invention relates to a composition as described herein, wherein the ratio between GOD (expressed in units) and $SCN^-$ (expressed in g) is between 100:1 and 30000:1, preferably between 180:1 and 25000:1, such as between 200:1 and 20000:1, between 400:1 and 15000:1, or between 600:1 and 10000:1, more preferably between 800:1 and 6000:1, even more preferably between 900:1 and 5100:1, such as 1000:1, 2000:1, 3000:1, 4000:1, or 5000:1.

In another embodiment, the invention relates to a composition as described herein, wherein the ratio between LP (expressed in units) and $SCN^-$ (expressed in g) is between 5000:1 and 1250000:1, preferably between 4800:1 and 1225500:1, such as between 5000:1 and 1000000:1, between 10000:1 and 750000:1, or between 15000:1 and 500000:1, more preferably between 20000:1 and 300000:1, even more preferably between 23000:1 and 250000:1, such as 25000:1, 50000:1, 100000:1, 150000:1, or 200000:1.

In a preferred embodiment, the invention relates to a composition as described herein, wherein the ratio between LP and GOD (both expressed in units) is between 25:1 and 50:1, and the ratio between LP (expressed in units) and SCN⁻ (expressed in g) is between 23000:1 and 250000:1.

The compositions as described herein may be formulated in any way, such as dry compositions, liquid compositions, partially liquid compositions, or gel compositions. In an embodiment, the composition is formulated as a liquid composition, preferably an aqueous composition. Liquid compositions can be obtained by dissolving the individual constituents in liquid. In a further embodiment, the composition is formulated as a gel. Gels can be obtained by adding appropriate gellifiers to a liquid composition, as well known in the art, and will not be discussed further. In a preferred embodiment, the composition is formulated as a dry composition, preferably a granulate, a powder, or a tablet, most preferably a powder. Methods for formulating compositions as granulates, powders, or tablets are well known in the art and will not be described further. The compositions as described herein may also be formulated as a dry composition, which may be prediluted in a concentrated solution, which concentrated solution may then be added to the food product. The skilled person will understand how to make the prediluted concentrated solution in order to come to the final concentration of each of the LPS components as described herein in the food product.

In an aspect, the invention relates to the use of a composition as described herein (such as the antimicrobial composition, for instance the bacteriostatic or bactericidal composition) as a food preservative. In a further aspect, the invention relates to the compositions as defined herein as antimicrobial compositions, such as bacteriostatic and/or bactericidal compositions.

As used herein, the term food preservative refers to a composition which extends the shelf life or storage life (which relates for instance to the expiry date) of a food product, and has its common meaning known in the art. In an embodiment, the invention relates to a composition as described herein which is capable of extending shelf life or storage life of a food product by at least 10%, preferably at least 20%, 30%, 40%, 50%, 60%, 70%, 80%, 90%, 100%, or more, such as more preferably 200%, 300%, 400%, 500% or more, compared to the shelf life or product life of the food product without the composition as defined herein added. The food preservatives as described herein thus prevent, inhibit and/or delay food product spoilage or decay, preferably microbial spoilage by preventing, delaying and/or inhibiting microbial growth and/or propagation, as defined herein elsewhere, and/or killing, as defined herein elsewhere, microorganisms, preferably the microorganisms as defined herein elsewhere.

As used herein, the term food can relate to any type of food, both human and animal food. Preferably, food refers to human food. It is to be understood, that food as referred to herein, relates to a product which is intended for consumption, i.e. ingestion. By means of further guidance, as used herein, food do not comprise for instance oral care products, such as toothpastes, oral disinfectants, or dental hygiene products such as anti-tartar products.

In an embodiment, the compositions as described herein are edible compositions. As used herein, an edible composition is a composition which is suitable for being consumed, i.e. ingested, preferably when appropriately diluted, such as when applied to a food product.

In an aspect, the invention relates to a food product comprising the composition, such as antimicrobial composition or food preservative, as described herein. In another aspect, the invention relates to a food product to which the composition, such as antimicrobial composition or food preservative, as described herein is added. It is to be understood that the all of the constituents of the compositions as described herein are exogenously applied to such food product (as opposed to food products endogenously containing one or more of the constituents of the herein described compositions to which the remainder of the constituents are added exogenously).

The food products as described herein may be solid, gel, liquid, or partially liquid food products. In an embodiment, the food product comprising the composition as described herein is a food product which is at least partially liquid. As used herein, the term at least partially liquid refers to a food product which under ambient temperature and pressure is free flowing. The skilled person will understand that the viscosity of such products may vary and hence will determine the flowability of the food product. Partially liquid food products comprise for instance also liquid food products in which solid food products are dispersed. In another embodiment, the food product comprising the composition as described herein is a solid or semi-solid food product. In an embodiment, the food product is cheese (which can be a soft or hard cheese or can be fresh cheese, i.e. semi-solid cheese). In a preferred embodiment, the food product as described herein is selected from dairy products, fruit and vegetable juices, sauces, dressings, pastes, (liquid) egg products, cheeses, and salads (such as for instance mayonnaise-based salads containing vegetables, meat, sea food, etc.). It will be understood by the skilled person that when the food product is liquid or semi-liquid or possibly a gel, the compositions as described herein may be added to the food mass, whereas when the food product is solid or possibly a gel (depending on the consistency) the compositions as described herein may be added on the surface of the food product (e.g. immersion of the food product in a liquid LPC containing composition, wherein the concentrations are chosen such that the final concentration of each of the LPS components per gram of food product correspond to as described herein).

It is to be understood that the compositions as described herein may also be added to one or more constituents of a composite food product.

In an embodiment, the food product as described herein comprises between 50 and 400 ppm of the composition as described herein, such as for instance 50, 75, 100, 125, 150, 175, 200, 225, 250, 275, 300, 325, 350, 375 or 400 ppm. In a further embodiment, the food product as described herein comprises between 50 and 150 ppm of the composition as described herein. In a further embodiment, the food product as described herein comprises between 100 and 200 ppm of the composition as described herein. In a further embodiment, the food product as described herein comprises between 200 and 300 ppm of the composition as described herein. In a further embodiment, the food product as described herein comprises between 300 and 400 ppm of the composition as described herein. In a further embodiment, the food product as described herein comprises between 150 and 250 ppm of the composition as described herein. In a further embodiment, the food product as described herein comprises between 250 and 350 ppm of the composition as described herein. In a further embodiment, the food product as described herein comprises between 250 and 300 ppm of the composition as described herein. In a further embodiment, the food product as described herein comprises between 300 and 350 ppm of the composition as described herein. In a further embodiment, the food product as described herein comprises between 50 and 100 ppm, between 75 and 125 ppm, between 100 and 150 ppm, between 125 and 175 ppm, between 150 and 200 ppm, between 175 and 225 ppm, between 200 and 250 ppm, between 225 and 275 ppm, between 250 and 300 ppm, between 275 and 325 ppm, between 300 and 350 ppm, between 325 and 375 ppm, or between 350 and 400 ppm of the composition as described herein.

In a further aspect, the invention relates to a food product as described herein, containing per 100 g of food product:

(i) 0.056-12.75 U GOD, preferably 0.45-7.65 U GOD;
(ii) 1.5-625 U LP, preferably 12-375 U LP;
(iii) 0.063-2.5 mg SCN, preferably 0.51-1.5 mg SCN; and
(iv) 0-15 mg glucose, preferably 0-9 mg glucose.

In an embodiment, this food product comprises per 100 g between 0.0037 and 0.85, preferably between 0.03 and 0.51 mg GOD. In another embodiment, this food product comprises per 100 g between 0.0015 and 0.625 mg LP, preferably between 0.012 and 0.375 mg LP. In a preferred embodiment, this food product comprises per 100 g 0.0037-0.85 mg GOD, preferably 0.03-0.51 mg GOD and 0.0015-0.625 mg LP, preferably 0.012-0.375 mg LP.

In another aspect, the invention relates to a food product as described herein, containing per 100 g of food product:

(i) 0.0037-0.85 mg GOD, preferably 0.03-0.51 mg GOD;
(ii) 0.0015-0.625 mg LP, preferably 0.012-0.375 mg LP;
(iii) 0.063-2.5 mg SCN, preferably 0.51-1.5 mg SCN; and
(iv) 0-15 mg glucose, preferably 0-9 mg glucose.

In a further aspect, the invention relates to a method for preserving a food product, or one or more constituent of a food product, comprising adding a composition as described herein to said food product or said one or more constituent of said food product. In another aspect, the invention relates to a method for extending the shelf life or storage life of a food product, comprising adding a composition as described herein to said food product or one or more constituent of said food product. In a further aspect, the invention relates to a method for preventing spoilage of a food product, in particular microbial spoilage of a food product, comprising adding a composition as described herein to said food product or one or more constituent of said food product. In another aspect, the invention relates to a method for at least partially inhibiting, preventing and/or delaying microbial growth in a food product, comprising adding a composition as described herein to said food product or one or more constituent of said food product. In yet another aspect, the invention relates to a method for killing at least partially microorganisms in a food product, comprising adding a composition as described herein to said food product or one or more constituent of said food product. The terms and conditions as defined in these aspects correspond to as explained herein elsewhere. In embodiments, the methods as described in the above aspects reduce the number of microorganisms, preferably viable microorganisms, preferably one or more microorganisms as described herein elsewhere. In an embodiment, according to the methods as described above, at least 10%, preferably by at least 20%, 30%, or 40%, more preferably at least 50%, 60%, or 70%, most preferably at least 80% or 90%, such as 95, 96, 97, 98, 99% or more microorganisms are killed, preferably one or more microorganisms as described herein elsewhere.

In an embodiment, the invention relates to any of the methods as described herein, comprising adding to a food product a composition as described herein to a final concentration of between 50 and 400 ppm of said composition, such as for instance 50, 75, 100, 125, 150, 175, 200, 225, 250, 275, 300, 325, 350, 375 or 400 ppm. In a further embodiment, the food product as described herein comprises between 50 and 150 ppm of the composition as described herein. In a further embodiment, the food product as described herein comprises between 100 and 200 ppm of the composition as described herein. In a further embodiment, the food product as described herein comprises between 200 and 300 ppm of the composition as described herein. In a further embodiment, the food product as described herein comprises between 300 and 400 ppm of the composition as described herein. In a further embodiment, the food product as described herein comprises between 150 and 250 ppm of the composition as described herein. In a further embodiment, the food product as described herein comprises between 250 and 350 ppm of the composition as described herein. In a further embodiment, the food product as described herein comprises between 250 and 300 ppm of the composition as described herein. In a further embodiment, the food product as described herein comprises between 300 and 350 ppm of the composition as described herein. In a further embodiment, the food product as described herein comprises between 50 and 100 ppm, between 75 and 125 ppm, between 100 and 150 ppm, between 125 and 175 ppm, between 150 and 200 ppm, between 175 and 225 ppm, between 200 and 250 ppm, between 225 and 275 ppm, between 250 and 300 ppm, between 275 and 325 ppm, between 300 and 350 ppm, between 325 and 375 ppm, or between 350 and 400 ppm of the composition as described herein. The food product to be applied in the methods as described herein is as detailed elsewhere herein.

In an embodiment, the invention relates to a method as described herein, wherein the food product is contacted with the composition as described herein for between 1 to 12 hours, such as for 1, 2, 3, 4, 5, 6, 7, 8, 9, 10, 11, or 12 hours, preferably for between 4 to 8 hours, such as for 4.0, 4.5, 5.0, 5.5, 6.0, 6.5, 7.0, 7.5, or 8.0 hours. In another embodiment, the invention relates to a method as described herein, wherein the food product is contacted with the composition as described herein at a temperature of between 5 and 45°C, preferably between 5 and 35°C, such as between 5-30°C, 5-25°C, 5-20°C, 5-15°C, 5-10°C, 10-35°C, 10-30°C, 10-25°C, 10-20°C, 10-15°C, 15-35°C, 15-30°C, 15-25°C, 15-20°C, 20-35°C, 20-30°C, 20-25°C, 25-35°C, or 30-35°C. In a further embodiment, the invention relates to a method as described herein, wherein the food product is contacted with the composition as described herein at a temperature of between 5 and 45°C, preferably between 5 and 35°C, such as between 5-30°C, 5-25°C, 5-20°C, 5-15°C, 5-10°C, 10-35°C, 10-30°C, 10-25°C, 10-20°C, 10-15°C, 15-35°C, 15-30°C, 15-25°C, 15-20°C, 20-35°C, 20-30°C, 20-25°C, 25-35°C, or 30-35°C during between 1 to 12 hours, such as for 1, 2, 3, 4, 5, 6, 7, 8, 9, 10, 11, or 12 hours, preferably for between 4 to 8 hours, such as for 4.0, 4.5, 5.0, 5.5, 6.0, 6.5, 7.0, 7.5, or 8.0 hours.

In an embodiment, the invention relates to any of the methods as described herein, further comprising the step of subjecting the food product or the one or more constituents of the food product to heat treatment after application of a composition as described herein.

In a preferred embodiment, said food product or said one or more constituent of said food product is subjected to heat treatment between 1 to 12 hours after application of the composition as described herein, such as after 1, 2, 3, 4, 5, 6, 7, 8, 9, 10, 11, or 12 hours. In a preferred embodiment, said food product or said one or more constituent of said food product is subjected to heat treatment between 4 to 8 hours after application of the composition as described herein, such as after 4.0, 4.5, 5.0, 5.5, 6.0, 6.5, 7.0, 7.5, or 8.0 hours. Accordingly, the food product is contacted with the composition as described herein for between 1 to 12 hours, such as for 1, 2, 3, 4, 5, 6, 7, 8, 9, 10, 11, or 12 hours, preferably for between 4 to 8 hours, such as for 4.0, 4.5, 5.0, 5.5, 6.0, 6.5, 7.0, 7.5, or 8.0 hours.

As used herein, the term heat treatment refers to subjecting a food product, or one or more constituent of a food product, to increased temperature in order to obtain microbistatic and/or microbicidal effects, i.e. heat treatment results in a delay or inhibition of microbial growth or propagation and/or kills microorganisms. In a preferred embodiment, heat treatment is or comprises pasteurization. Pasteurization is well known in the art. By means of further guidance, as used herein pasteurization relates to a process of heating a food, which may be or usually is a liquid, to a specific temperature for a predefined length of time, usually followed by immediate cooling of the food product. Usually, pasteurization results in the prevention or delay of food spoilage by reducing the number of viable microorganisms. Often, pasteurization does not kill all microorganisms present in a food product.

The skilled person will appreciate that pasteurization conditions may depend on the type of food product, and that there usually is an inverse correlation between treatment time and temperature, i.e. higher temperatures require shorter time or longer times require lower temperatures to reach similar antimicrobial effects. By means of example, and without limitation, dairy products may for instance be pasteurized at a temperature of 71-74°C for about 15-30 seconds, resulting in at least three log reduction of viable microorganisms (i.e. 99.9% or greater reduction). Egg products, preferably liquid egg products, can for instance be pasteurized at temperatures between 60 and 69°C for variable times.

According to this embodiment, treatment of a food product, or one or more constituent of a food product, with a composition as described herein prior to heat treatment, preferably pasteurization, results in increased antimicrobial effects, such as for instance increased antibacterial, such as microbistatic and/or microbicidal effects, i.e. the shelf life of the food product increases and/or the amount of viable microorganisms decreases.

Accordingly, in an embodiment, the invention relates to any of the methods as described herein, further comprising the step of subjecting the food product or the one or more constituents of the food product to heat treatment after application of a composition as described herein, wherein more microorganisms are killed as a result of the combined treatment compared to either treatment alone. It has been found that the compositions as described herein work synergistically with heat treatment for obtaining antimicrobial effects, in particular and preferably antibacterial effects, such as bacteriostatic or bactericidal effects.

In an embodiment, the invention relates to a combined treatment of a food product, or one or more constituent of a food product, with a composition as described herein according to any of the methods as described herein and subsequent heat treatment, preferably after 1-12 hours, more preferably after 4-8 hours, to reduce the number of viable microorganisms, preferably one or more microorganisms as described herein elsewhere, resulting in at least four log reduction (i.e. at least 10000 fold reduction, or reduction with 99.99%), preferably at least five log reduction, more preferably at least six log reduction, or more.

In another embodiment, the invention relates to a combined treatment of a food product, or one or more constituent of a food product, with a composition as described herein according to any of the methods as described herein and subsequent heat treatment, preferably after 1-12 hours, more preferably after 4-8 hours, to reduce the number of viable microorganisms, preferably one or more microorganisms as described herein elsewhere, resulting in at least a twofold increase in reduction of viable microorganisms compared to heat treatment alone (preferably under standard conditions, as known in the art), preferably at least a threefold increase, more preferably at least a five fold increase, even more preferably at least a tenfold increase, most preferably at least a hundred fold increase.

In another embodiment, the invention relates to a combined treatment of a food product, or one or more constituent of a food product, with a composition as described herein according to any of the methods as described herein and subsequent heat treatment, preferably after 1-12 hours, more preferably after 4-8 hours, to reduce the number of viable microorganisms, preferably one or more microorganisms as described herein elsewhere, resulting in at least a twofold increase in reduction of viable microorganisms compared to treatment with the composition as described herein alone, preferably at least a threefold increase, more preferably at least a five fold increase, even more preferably at least a tenfold increase, most preferably at least a hundred fold increase.

In a further embodiment, the invention relates to a combined treatment of a food product, or one or more constituent of a food product, with a composition as described herein according to any of the methods as described herein and subsequent heat treatment (preferably pasteurization), preferably after 1-12 hours, more preferably after 4-8 hours, wherein said heat treatment is shortened in time with at least 10%, for instance between 10 and 50%, preferably with at least 20%, such as 20, 30, 40, 50% or more, compared to standard heat treatment, as known in the art. It has been found that according to this embodiment, at least the same, if not better, antimicrobial effects can be obtained as with heat treatment alone. For instance at least the same or similar amounts of microorganisms can be killed or the number of viable microorganisms, preferably one or more microorganisms as described herein elsewhere, can be reduced to at least the same or similar level.

In a further embodiment, the invention relates to a combined treatment of a food product, or one or more constituent of a food product, with a composition as described herein according to any of the methods as described herein and subsequent heat treatment (preferably pasteurization), preferably after 1-12 hours, more preferably after 4-8 hours, wherein the temperature of said heat treatment is lowered with at least 2.5%, for instance between 2.5 and 25%, preferably with at least 5%, such as 5, 10, 15, 20, or 25% or more, compared to standard heat treatment, as known in the art. It has been found that according to this embodiment, at least the same, if not better, antimicrobial effects can be obtained as with heat treatment alone. For instance at least the same or similar amounts of microorganisms can be killed or the number of viable microorganisms, preferably one or more microorganisms as described herein elsewhere, can be reduced to at least the same or similar level.

It is known in the art that heat treatment of a food product may influence taste characteristics of said food product. Accordingly, the combined application of the compositions as described herein with heat treatment, allows for a shorter time of heat treatment and/or a lower temperature of the heat treatment, such that effects on taste characteristics can be diminished. Also a shorter time or a lower temperature is more cost-effective.

The aspects and embodiments of the invention are further supported by the following non-limiting examples.

### EXAMPLES

**EXAMPLE 1:** Antilisterial activity of LPS in milk

Experimental design

Based on challenge tests at constant temperature (7°C), the antilisterial effect of the lactoperoxidase system according to an embodiment of the invention was evaluated. The challenge tests were performed according to the 'Technical guidance document on shelf-life studies for Listeria monocytogenes in ready-to-eat foods' (EU CRL Listeria, november 2008) by the BELAC accreditated laboratory (accreditation certificate n° 059-TEST). Tests were executed in UHT milk which was aseptically divided into smaller portions and inoculated with a cocktail of *L. monocytogenes* strains (LMG 23194, LFMFP 392 and LFMFP 491) at an inoculation level of approximately 50 CFU/ml. The LPS product was added to the milk in different concentrations (0, 100 and 300 ppm). Samples were analyzed on day 0 (before and after inoculation) and at different days during storage at 7°C. The challenge tests were performed in threefold.

The used LPS product in this and the following examples, unless otherwise specified, comprises:

GOD: 0.75 wt% (activity 15 U/mg)
LP: 1.25 wt% (activity 1000 U/mg)
NaSCN: 5 wt%
Glucose: 30 wt%

Results

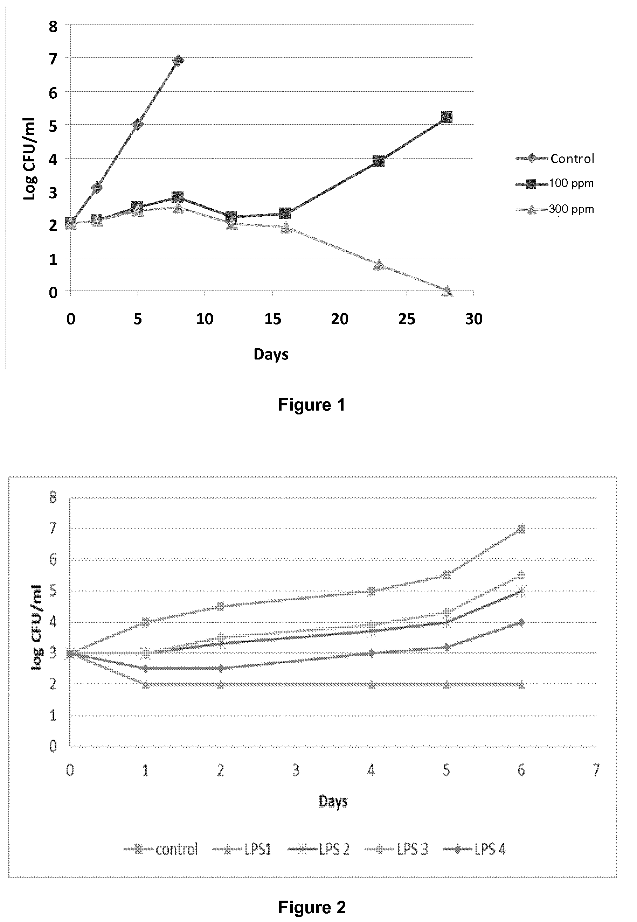

The pH of the product was 6.66. After adding the LPS product there was a small increase until 6.74. The water activity was 0.996. Before inoculation all 9 samples showed absence of *L. monocytogenes* in 25 ml. Table 1 summarizes the cell counts (log CFU/ml) of *L. monocytogenes* for the different tested conditions. The mean and standard deviations of these cell counts are plotted as a function of time in Figure 1.

The results show that in the control samples (= 0 ppm) *L. monocytogenes* started to grow immediately and reached approximately 7 log CFU/ml after 8 days. Adding 100 ppm of the LPS product prolonged the lag phase of *L. monocytogenes* with 16 days. Afterwards L. monocytogenes started to grow at a slightly slower growth rate than in the control. In the samples containing 300 ppm of the LPS product, the cell count was stable during the first 16 days of incubation and afterwards inactivation occurred. On the last day of analysis (Day 28), absence of L. monocytogenes in 25 ml was detected for two out of three replicates.

Table 1: Cell counts (log cfu/ml) of *L. monocytogenes* in milk during incubation at 7°C

| Time (days) | Control | | | 100 ppm | | | 300 ppm | | |
|---|---|---|---|---|---|---|---|---|---|
| | 1 | 2 | 3 | 1 | 2 | 3 | 1 | 2 | 3 |
| 0 | 2.0 | 2.0 | 2.0 | 2.0 | 2.0 | 2.0 | 2.0 | 1.9 | 2.0 |
| 2 | 3.1 | 3.1 | 3.3 | 2.1 | 2.1 | 2.4 | 2.0 | 2.0 | 2.1 |
| 5 | 5.0 | 4.9 | 5.3 | 2.4 | 2.3 | 2.5 | 2.3 | 2.3 | 2.1 |
| 8 | 6.7 | 6.8 | 6.9 | 2.6 | 2.7 | 2.7 | 2.4 | 2.4 | 2.4 |
| 12 | - | - | - | 2.2 | 2.3 | 2.2 | 2.1 | 1.8 | 2.1 |
| 16 | - | - | - | 2.4 | 2.2 | 2.4 | 2.4 | 1.2 | 2.3 |
| 23 | - | - | - | 3.6 | 3.7 | 3.9 | 0.7 | 0.2 | 1.4 |
| 28 | - | - | - | 5.3 | 5.4 | 5.2 | 0.0 | Abs/ 25 ml | Abs/ 25 ml |
| - not analyzed because of growth of *L. monocytogenes* | | | | | | | | | |

The performed challenge tests prove the antilisterial effect of the LPS product in UHT milk stored at 7°C. The intermediate concentration gave a growth delay (longer lag phase and slower growth rate) while the highest concentration induced an inactivation of the target micro-organism.

**EXAMPLE 2:** Antimicrobial activity of LPS in semi-skimmed milk inoculated with *Lactobacillus brevis*

*Lactobacillus brevis* is a very well-known micro-organism responsible for the microbial spoilage of milk and many other food products. Semi-skimmed milk was inoculated with *Lactobacillus brevis* in a challenge test, according to the protocol below.

Experimental design

*MA TERIALS*

- *Lactobacillus brevis* ATCC 8287 / Disc Oxoid NLB145
- Semi-skimmed UHT milk
- Incubator 12°C
- Incubator 30°C
- Vortex mixer

- Sterile Petri dishes (9 cm) ;
- Sterile pipettes tips 100 $\mu$l:
- Sterile pipettes tips 1000 $\mu$l:
- Sterile MRS (Man, Rogosa and Sharpe) agar bottle (ready to use)
- PPS (pepton or trypton physiological salt solution) sterile tubes (10 ml)

*METHOD*

Preparation of culture medium

- Inoculate 5 ml of semi-skimmed milk with one disc of *Lactobacilus brevis*;
- Mix the inoculated milk by vortexing
- Incubate overnight at 30°C (20 h to 24 h). Mother solution with $10^7$- $10^8$ cfu/ml is obtained.
- Dilution of the level of *Lactobacillus brevis* in trypton physiological solution:
- Dilute the milk 100 times (from $10^8$ to $10^6$) by adding two times 1 ml to 9 ml PPS. **"Solution 1"** is obtained with a level of $10^6$ cfu/ml of *Lactobacillus brevis.*
- Add 2 ml of solution 1 in 8 ml PPS. Level of *Lactobacilus brevis* of $2*10^5$ cfu/ml is obtained in **"Solution 2"**

Preparation of the control solution:

- Inoculate 99,7 ml of semi-skimmed UHT milk with 0,3 ml of **"solution 2"** to achieve a level of *Lactobacilus brevis* of $6*10^2$ cfu/ml **("Solution 3").**
- Incubate **"Solution 3"** at 12°C and analyze daily.

Preparation of LPS solution:

- Add 3 g of the LPS in a recipient of 100 ml, bring the volume to 100 ml with demineralized water and mix.
- Incubate the solution of LPS at about 20°C, during 15 minutes;
- Inoculate 98,7 ml of semi-skimmed UHT milk with 0,3 ml of **"solution 2"** to achieve a level of *Lactobacilus brevis* of $6*10^2$ cfu/ml (inoculated milk)
- Add 1 ml of the solution of the LPS solution to the inoculated milk to achieve the level of *Lactobacilus brevis* of $6*10^2$ cfu/ml and the LPS concentration of 300 ppm. **(Solution 4).**
- Incubate **"solution 4"** at 12° C and analyze daily.

Bacteriological analysis:

*Preparation of MRS agar:*

  ◦ Put the MRS agar bottles in a water bath at 95°C;
  ◦ Let MRS agar melt for 60 minutes ;
  ◦ Let MRS agar cool to about 47° C, while remaining liquid.

*Preparation of the Petri dishes:*

  ◦ Remove the **"solution 4"** and the **"solution 3"** from the incubator at 12° C
  ◦ According the concentration level of *Lactobacilus brevis,* dilute the **"solution 4"** and the **"solution 3"** as many times as necessary, each time by adding 1 ml of the concentrated solution into 9 ml of trypton physiological solution.
  ◦ Add 1 ml of the solution with the desired dilution in a Petri dish, using pipettes with sterile tips
  ◦ Pour liquid MRS agar prepared as described above in the petri dish and fill to two-thirds of the volume of the petri dish.
  ◦ Shake gently the Petri dishes and wait 10 minutes.
  ◦ Pour a second layer of liquid MRS agar in the Petri dish (to create an « anaerobic » zone between the 2 layers of MRS agar)

◦ Incubate the petri dish at 30° C, upside down, for 72 hours.

*Colony count of bacteria in petri dishes (CFU)*

◦ *Lactobacillus brevis* colonies are white, round / oval;
◦ Count the number of colonies on the Petri dish, and determine the number of colonies in relation to the used dilution.
◦ Compare the results obtained with the control and the LPS solution.

*RESULTS*

The following types of LPS products were used:

- LPS1: 0.75 wt% GOD; 1.25 wt% LP; 5 wt% SCN; 30 wt% glucose
- LPS2: 0.75 wt% GOD; 1.25 wt% LP; 1.7 wt% SCN; 20 wt% glucose
- LPS3: 1.7 wt% GOD; 0.04 wt% LP; 1.7 wt% SCN; 0 wt% glucose
- LPS4: 0.1 wt% GOD; 1.25 wt% LP; 3.5 wt% SCN; 20 wt% glucose

Table 2 and Figure 2 show the results of the challenge tests in semi-skimmed milk including 300 ppm of the above three LPS products and inoculated for the indicated amount of days with *L. brevis.* The control sample did not contain any LPS.

Table 2: Cell counts (log cfu/ml) of *L. brevis* in semi-skimmed milk during incubation at 7°C

| Time (days) | Control | LPS1 | LPS2 | LPS3 | LPS4 |
|---|---|---|---|---|---|
| 0 | 3.0 | 3.0 | 3.0 | 3.0 | 3.0 |
| 1 | 4.0 | 2.0 | 3.0 | 3.0 | 2.5 |
| 2 | 4.5 | 2.0 | 3.3 | 3.5 | 2.5 |
| 4 | 5.0 | 2.0 | 3.7 | 3.9 | 3.0 |
| 5 | 5.5 | 2.0 | 4.0 | 4.3 | 3.2 |
| 6 | 7.0 | 2.0 | 5.0 | 5.5 | 4.0 |

The results show that in the control samples (= 0 ppm) *L. brevis* started to grow immediately and reached approximately 7 log CFU/ml after 6 days. Adding 300 ppm of LPS2 and LPS3 products prolonged the lag phase of *L. brevis.* Afterwards *L. brevis* started to grow at a slower growth rate than in the control. Adding 300 ppm of LPS4 products resulted in an initial decline of *L. brevis.* Afterwards *L. brevis* started to grow at a slower growth rate than in the control. Adding 300 ppm of LPS1 even resulted in a stable decline of *L. brevis* count over time.

The performed challenge tests prove the antibacterial effect of the LPS product in UHT milk stored at 7°C for a variety of LPS products. In any case, a delay in bacterial growth is observed for varying concentrations of LPS constituents, up to a maintained suppression of bacterial growth.

**EXAMPLE 3:** Antimicrobial activity of LPS on semi-skimmed milk inoculated with *Escherichia coli* O157:H7

Experimental design

Semi-skimmed milk was inoculated with a cocktail of Escherichia coli O157:H7 strains (LFMFP 463, LFMFP 474 and LMG 21756) at a level of 50 cfu/ml. LPS was added in different concentrations (0ppm (= control), 100ppm, 300ppm). The milk was divided in portions and stored at 12°C. Analyses were performed on day 0, day 3, day 4, day 5, day 6 and day 7. The experiment was performed in threefold.

Results

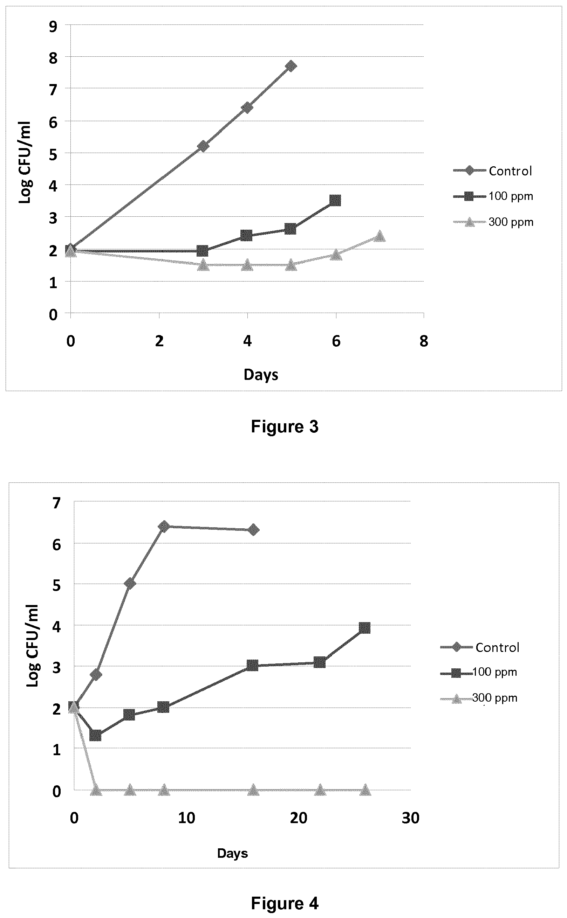

Table 3 and Figure 3 depict cell counts of Escherichia coli O157:H7 in milk during incubation at 12°C. LPS clearly suppressed the growth of a mixture of *Escherichia coli* O157:H7 strains inoculated in milk. At 300 ppm, no growth of the pathogen was observed after 7 days.

Table 3: Cell counts (log cfu/ml) of *Escherichia coli* O157:H7 in milk during incubation at 12°C

| Time (days) | Control | | | 100 ppm | | | 300 ppm | | |
|---|---|---|---|---|---|---|---|---|---|
| | 1 | 2 | 3 | 1 | 2 | 3 | 1 | 2 | 3 |
| 0 | 2.0 | 2.0 | 2.0 | 1.9 | 1.9 | 1.9 | 1.9 | 1.9 | 1.9 |
| 3 | 5.2 | 5.2 | 5.2 | 1.9 | 1.9 | 1.9 | 1.7 | 1.4 | 1.5 |
| 4 | 6.3 | 6.5 | 6.5 | 2.4 | 2.4 | 2.4 | 1.6 | 1.5 | 1.5 |
| 5 | 7.7 | 7.8 | 7.7 | 2.7 | 3.0 | 2.2 | 1.5 | 1.4 | 1.7 |
| 6 | - | - | - | 3.6 | 3.3 | 3.5 | 1.8 | 1.6 | 1.9 |
| 7 | - | - | - | - | - | - | 2.3 | 2.3 | 2.6 |

**EXAMPLE 4:** Evaluation of the antimicrobial effect towards lactic acid bacteria of LPS

Experimental design

Emulsified sauces (type dressing) were made with pH 4.0 and 2% salt. Before making the emulsion the antimicrobial component was added in two different concentrations (100 and 300 ppm). These products were inoculated with a cocktail of three lactic acid bacteria (Lactobacillus brevis, Lactobacillus fructivorans en Lactobacillus plantarum). The sauces were stored at 22°C and at regular time intervals the growth of the spoilage organisms was monitored and compared with the growth in the control.

Results

The inoculation level of the mix of lactic acid bacteria was approximately 2.2 log CFU/g. The initial pH of the dressing was $4.07 \pm 0.04$ and the aw $0.9611 \pm 0.001$. The salt concentration was $2.14 \% \pm 0.04$ (analytically determined).
The results show a clear antimicrobial effect towards lactic acid bacteria (Figure 4). In the control (= 0 ppm) the lactic acid bacteria grew immediately and the maximal cell count was reached after 9 days incubation at 22°C. Therefore the analyses were stopped after Day 16. The remaining data points of the control were replaced by extra analyses on the dressings with LPS (Day 30). In the dressings with 100 ppm as well as in these with 300 ppm of LPS, an initial decrease in the cell count was noticed, even below the detection limit for the highest concentration of the product. At the intermediate concentration (100 ppm) a delayed growth was noticed and the cell count did not reach 4 log CFU/g during the complete shelf-life (30 days). This remains far below the criterion for lactic acid bacteria in these products at the end of the shelf life. For the highest concentration, the cell count remained below the detection limit during 26 days at 22°C. At day 30 a slightly higher cell count was detected. As there were no extra days of analyses left, this trend could not be confirmed.

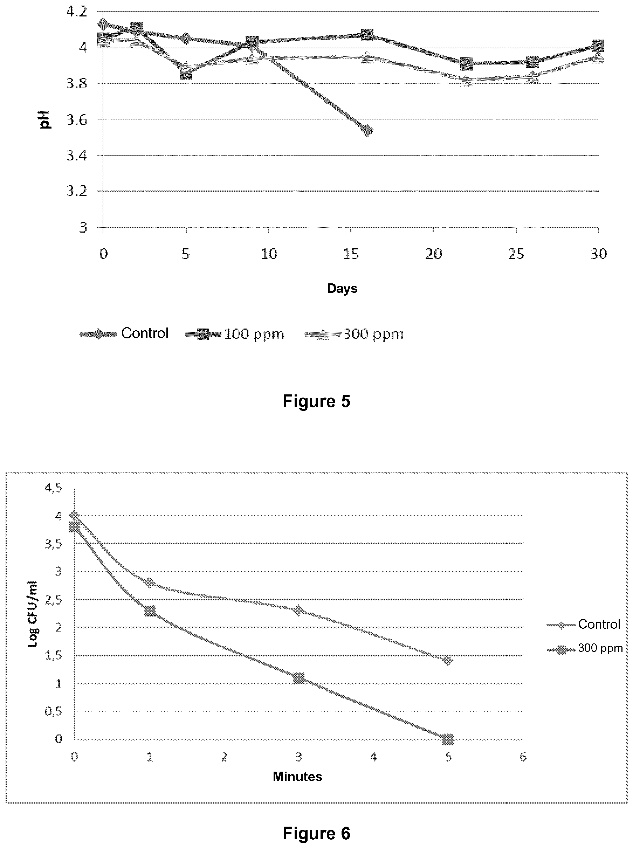

Figure 5 shows the evolution in pH for the different dressings. This proofs that the pH is relative stable, also in the dressings with the antimicrobial product. The decrease in pH for the control at Day 16 is caused by the high cell number of lactic acid bacteria.
The results show that LPS has a clear antimicrobial effect towards lactic acid bacteria in media with pH 4.0 and stored at 22°C. Besides a concentration effect of the products has been observed: the higher the concentration, the better the performance

**EXAMPLE 5:** Antimicrobial activity of LPS in whole liquid egg inoculated with Salmonella spp.

Experimental design

Whole liquid egg was divided in smaller portions and was inoculated with a cocktail of Salmonella strains (LMG 10395 and LMG 10396) at a level of 9000 cfu/ml. LPS was added at a concentration of 300 ppm. After 8 hours at 7°C the whole liquid egg was pasteurized for 1 min., 3 min. and 5 min. at 55°C and cooled down in an ice water bath. The samples were analyzed immediately.

- LPS: 0 ppm (= control), 300 ppm
- whole liquid egg

- first stored 8h/7°C then pasteurized: 55°C during 1 min, 3 min, 5 min
- Salmonella Enteritidis (LMG 10395) and Salmonella Typhymurium (LMG 10396)

Results

Table 4 and Figure 6 show that in the egg samples where LPS was added, the destruction of Salmonella spp. is more effective than in the egg samples without LPS.

Table 4: Effect of LPS on the cell count (log cfu/ml) of Salmonella spp. in whole liquid egg stored for 8h at 7°C and then pasteurized at 55°C

| Time (minutes) after 8h/7°C | Control | 300 ppm |
| --- | --- | --- |
| 0 | 4.0 | 3.8 |
| 1 | 2.8 | 2.3 |
| 3 | 2.3 | 1.1 |
| 5 | 1.4 | 0.0 |

These results clearly demonstrate the additional effect of pasteurization when LPS was added 8 hours at 7°C before pasteurization. Combining LPS and pasteurization significantly increase the effect of pasteurization of whole liquid egg.

**EXAMPLE 6:** Antimicrobial activity of LPS added in raw milk before pasteurization (15sec/72°C)

Experimental design

Raw milk was divided in smaller portions and LPS was added at a concentration of 300 ppm. After 8 hours at 7°C the raw milk was pasteurized for 15 sec. at 72°C and cooled down in ice water. The samples were stored at 12°C. Analysis was performed on day 0, day 1, day 2 and day 3.

- LPS: 0 ppm (= control), 300 ppm
- raw milk
- first stored 8h/7°C then pasteurized: 72°C during 15 sec.
- 3 days at 12°C

Results

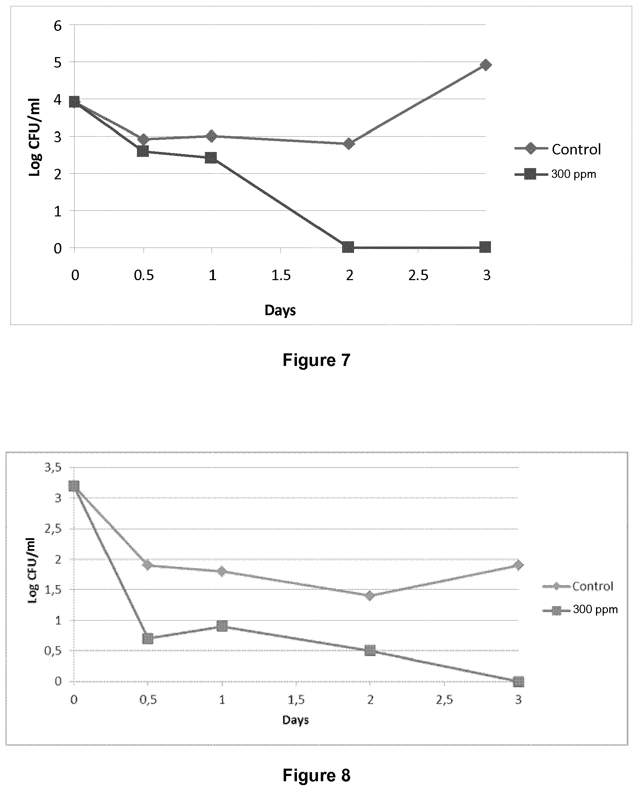

Table 5 and Figure 7 summarize the total aerobic psychrotrophic (incubation at 22°C) cell count (log cfu/ml) for the different tested conditions at 12°C. The results show that the growth of bacteria in the control samples (without LPS) restarted on day 3. In the samples with LPS (300 ppm) the bacteria were inactivated after 2 days at 12°C and no further growth was observed.

Table 5: Total aerobic psychrotrophic (incubation at 22°C) cell count (log cfu/ml) in milk stored for 8h at 7°C as influenced by addition of LPS added before pasteurization (72°C for 15 sec).

| Time (days) | Control | 300 ppm |
| --- | --- | --- |
| 0 | 3.9 | 3.9 |
| 0 (after past.) | 2.9 | 2.6 |
| 1 | 3.0 | 2.4 |
| 2 | 2.8 | 0.0 |
| 3 | 4.9 | 0.0 |

Table 6 and Figure 8 summarize the total anaerobic psychrotrophic (incubation at 22°C) cell count (log cfu/ml) for the different tested conditions at 12°C. The results show that the growth of bacteria in the control samples (without LPS) restarted on day 3. In the samples with LPS (300 ppm) the bacteria were inactivated after 3 days at 12°C.

Table 6: Total anaerobic psychrotrophic (incubation at 22°C) cell count (log cfu/ml) in milk stored for 8h at 7°C as influenced by addition of LPS added before pasteurization (72°C for 15 sec).

| Time (days) | Control | 300 ppm |
| --- | --- | --- |
| 0 | 3.2 | 3.2 |
| 0 (after past.) | 1.9 | 0.7 |
| 1 | 1.8 | 0.9 |
| 2 | 1.4 | 0.5 |
| 3 | 2.9 | 0.0 |

Table 7 summarizes the cell count (log cfu/ml) of lactic acid bacteria for the different tested conditions at 12°C. The results show that no growth of the lactic acid bacteria was observed in the control samples (without LPS) after 3 days. In the samples with LPS (300 ppm) the lactic acid bacteria were completely inactivated by the pasteurization. No further growth was observed during 3 days at 12°C.

Table 7: The cell count of lactic acid bacteria (log cfu/ml) in milk stored for 8h at 7°C as influenced by addition of LPS added before pasteurization (72°C for 15 sec).

| Time (days) | Control | 300 ppm |
| --- | --- | --- |
| 0 | 2.7 | 2.7 |
| 0 (after past.) | 1.2 | 0.0 |
| 1 | 1.6 | 0.0 |
| 2 | 0.0 | 0.0 |
| 3 | 1.3 | 0.0 |

Table 8 summarizes the cell count (log cfu/ml) of yeasts for the different tested conditions at 12°C. The results show that the yeasts were completely inactivated by the pasteurization. No further growth was observed during 3 days at 12°C.

Table 8: The cell count of yeasts (log cfu/ml) in milk stored for 8h at 7°C as influenced by addition of LPS added before pasteurization (72°C for 15 sec).

| Time (days) | Control | 300 ppm |
| --- | --- | --- |
| 0 | 2.0 | 2.0 |
| 0 (after past.) | <1.0 | <1.0 |
| 1 | <1.0 | <1.0 |
| 2 | <1.0 | <1.0 |
| 3 | <1.0 | <1.0 |

Table 9 summarizes the cell count (log cfu/ml) of moulds for the different tested conditions at at 12°C. The results show that the moulds were completely inactivated by the pasteurization. No further growth was observed during 3 days at 12°C.

Table 9: The cell count of moulds (log cfu/ml) in milk stored for 8h at 7°C as influenced by addition of LPS added before pasteurization (72°C for 15 sec).

| Time (days) | Control | 300 ppm |
| --- | --- | --- |
| 0 | 1.3 | 1.3 |
| 0 (after past.) | <1.0 | <1.0 |

(continued)

| Time (days) | Control | 300 ppm |
| --- | --- | --- |
| 1 | <1.0 | <1.0 |
| 2 | <1.0 | <1.0 |
| 3 | <1.0 | <1.0 |

LPS showed to be effective in milk, after a pasteurization of 15sec/72°C, for preventing outgrowth of microorganisms surviving the pasteurization after a storage period of 3 days at 12°C.

**EXAMPLE 7:** Antimicrobial activity of LPS added in raw milk before pasteurization (15sec/72°C)

Experimental design 1

Fresh raw milk was divided in smaller portions and LPS was added at different concentrations (0 ppm, 300 ppm). After 8 hours at 7°C the raw milk was pasteurized for 15 sec. at 72°C and cooled down in ice water. The samples were stored at 12°C. Microbial analysis was performed on day 0, day 1, day 2, day 3, day 5 and day 7.

- LPS: 0 ppm (= control), 300 ppm
- fresh raw milk
- first stored 8h/7°C then pasteurized: 72°C during 15 sec.
- 7 days at 12°C

Results

Table 10 summarizes the total aerobic psychrotrophic (incubation at 22°C) cell count (log cfu/ml) for the different tested conditions at 12°C. The results show that the growth of bacteria in the control samples (without LPS) restarted on day 2 and reached approximately log 7 cfu/ml for the control samples after 7 days at 12°C. In the samples at which 300 ppm LPS was added, the bacteria restarted to grow after 2 days and reached only log 4 cfu/ml after 7 days at 12°C.

Table 10: Total aerobic psychrotrophic (incubation at 22°C) cell count (log cfu/ml) in raw milk in which LPS was added at different concentrations. After addition, the milk was stored for 8h at 7°C after which it was pasteurized (72°C for 15sec). The milk was further stored at 12°C during 7 days.

| Time(days) | Control | 300 ppm |
| --- | --- | --- |
| 0 | 6.1 | 6.1 |
| 0 (after 8h/7°C) | 6.6 | 6.2 |
| 0 (after past.) | 1.4 | 0.0 |
| 1 | 0.5 | 0.0 |
| 2 | 2.6 | 2.2 |
| 3 | 3.9 | ND* |
| 5 | 6.2 | 2.1 |
| 7 | 6.9 | 4.1 |

Table 11 summarizes the total anaerobic psychrotrophic (incubation at 22°C) cell count (log cfu/ml) for the different tested conditions at 12°C. The results show that the growth of bacteria in the control samples (without LPS) restarted on day 3 and reached approximately log 7 cfu/ml for the control samples after 7 days at 12°C. In the samples at which 300 ppm LPS was added, the bacteria restarted to grow after 7 days at 12°C.

Table 11: Total anaerobic psychrotrophic (incubation at 22°C) cell count (log cfu/ml) in raw milk in which LPS was added at different concentrations. After addition, the milk was stored for 8h at 7°C after which it was pasteurized (72°C for 15sec). The milk was further stored at 12°C during 7 days.

| Time(days) | Control | 300 ppm |
|---|---|---|
| 0 | 4.3 | 4.3 |
| 0 (after 8h/7°C) | 5.2 | 4.3 |
| 0 (after past.) | 1.9 | 1.2 |
| 1 | 0.8 | 1.1 |
| 2 | 1.8 | 1.6 |
| 3 | 3.0 | ND* |
| 5 | 5.9 | 1.1 |
| 7 | 6.6 | 4.0 |
| *: no data available | | |

Table 12 summarizes the cell count (log cfu/ml) of lactic acid bacteria for the different tested conditions at 12°C. The results show that the growth of bacteria in the control samples (without LPS) restarted after 3 days and reached approximately log 7 cfu/ml after 7 days at 12°C. In the samples at which 300 ppm LPS was added, the lactic acid bacteria restarted to grow after 7 days at 12°C.

Table 12: The cell count of lactic acid bacteria (log cfu/ml) in raw milk in which LPS was added at different concentrations. After addition, the milk was stored for 8h at 7°C after which it was pasteurized (72°C for 15sec). The milk was further stored at 12°C during 7 days.

| Time(days) | Control | 300 ppm |
|---|---|---|
| 0 | 4.3 | 4.3 |
| 0 (after 8h/7°C) | 4.3 | 4.4 |
| 0 (after past.) | 1.3 | 0.0 |
| 1 | 0 | 0.0 |
| 2 | 1.7 | 0.5 |
| 3 | 2.4 | ND* |
| 5 | 5.8 | 0.0 |
| 7 | 6.7 | 3.7 |
| *: no data available | | |

Table 13 summarizes the cell count (log cfu/ml) of yeasts for the different tested conditions at 12°C. The results show that the yeasts were completely inactivated by the pasteurization. No further growth was observed during 7 days at 12°C.

Table 13: The cell count of yeasts (log cfu/ml) in raw milk in which LPS was added at different concentrations. After addition, the milk was stored for 8h at 7°C after which it was pasteurized (72°C for 15sec). The milk was further stored at 12°C during 7 days.

| Time(days) | Control | 300 ppm |
|---|---|---|
| 0 | 3.0 | 3.0 |
| 0 (after 8h/7°C) | 3.1 | 3.1 |
| 0 (after past.) | <1.0 | <1.0 |
| 1 | <1.0 | <1.0 |

(continued)

| Time(days) | Control | 300 ppm |
|---|---|---|
| 2 | <1.0 | <1.0 |
| 3 | <1.0 | <1.0 |
| 5 | <1.0 | <1.0 |
| 7 | <1.0 | <1.0 |

Table 14 summarizes the cell count (log cfu/ml) of moulds for the different tested conditions at 12°C. The results show that the moulds were completely inactivated by the pasteurization. No further growth was observed during 7 days at 12°C.

Table 14: The cell count of moulds (log cfu/ml) in raw milk in which LPS was added at different concentrations. After addition, the milk was stored for 8h at 7°C after which it was pasteurized (72°C for 15sec). The milk was further stored at 12°C during 7 days.

| Time(days) | Control | 300 ppm |
|---|---|---|
| 0 | 1.3 | 1.3 |
| 0 (after 8h/7°C) | 1.7 | <1.0 |
| 0 (after past.) | <1.0 | <1.0 |
| 1 | <1.0 | <1.0 |
| 2 | <1.0 | <1.0 |
| 3 | <1.0 | <1.0 |
| 5 | <1.0 | <1.0 |
| 7 | <1.0 | <1.0 |

The results illustrate that adding 300 ppm LPS before pasteurization and with an intermediate storage of 8h at 7°C, did prolong the shelf life at 12°C of the pasteurized milk significantly.

Experimental design 2

Fresh raw milk was divided in smaller portions and LPS was added at a concentration of 300 ppm. After 4 hours at 7°C the raw milk was pasteurized for 15 sec. at 72°C and cooled down in ice water. The samples were stored at 12°C. Microbial analysis was performed on day 0, day 1, day 2, day 3, day 5 and day 7.

- LPS: 0 ppm, 300 ppm
- fresh raw milk
- first stored 4h/7°C then pasteurized: 72°C during 15 sec.
- 7 days at 12°C

Results

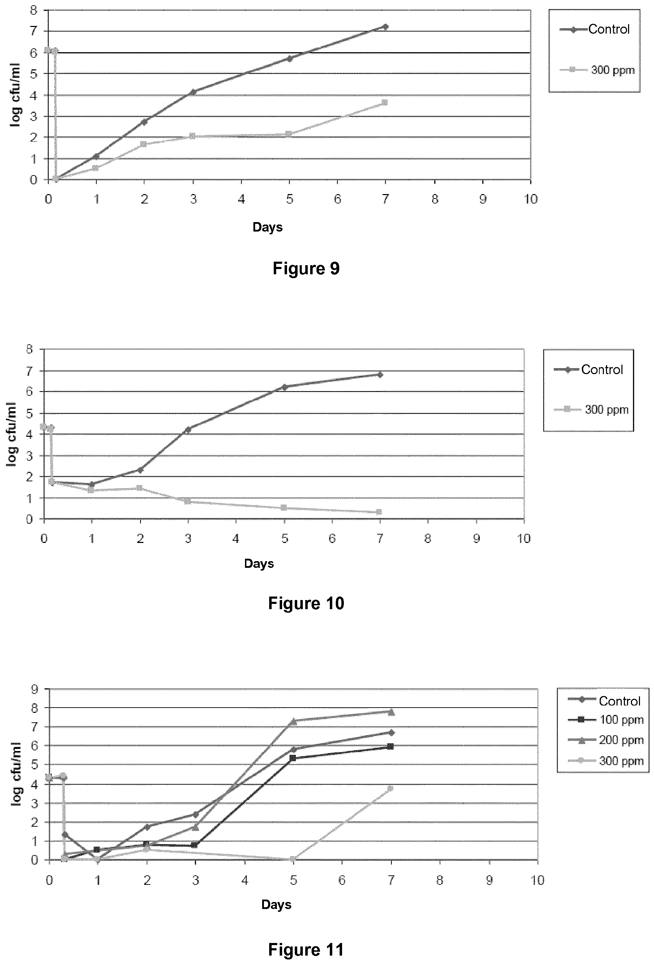

Table 15 and Figure 9 summarize the total aerobic psychrotrophic (incubation at 22°C) cell count (log cfu/ml) for the different tested conditions at 12°C. The results show that the growth of bacteria in the control samples (without LPS) restarted on day 2 and reached approximately log 7 cfu/ml after 7 days at 12°C. In the samples at which 300 ppm LPS was added, the bacteria restarted to grow after 2 days and reached only approximately log 4 cfu/ml after 7 days at 12°C.

Table 15: Total aerobic psychrotrophic (incubation at 22°C) cell count (log cfu/ml) in raw milk in which LPS was added at different concentrations. After addition, the milk was stored for 4h at 7°C after which it was pasteurized (72°C for 15sec). The milk was further stored at 12°C during 7 days.

| Time(days) | Control | 300 ppm |
|---|---|---|
| 0 | 6.1 | 6.1 |
| 0 (after 4h/7°C) | 6.1 | 6.0 |
| 0 (after past.) | 0.0 | 0.0 |
| 1 | 1.1 | 0.5 |
| 2 | 2.7 | 1.6 |
| 3 | 4.1 | 2.0 |
| 5 | 5.7 | 2.1 |
| 7 | 7.2 | 3.6 |

Table 16 and Figure 10 summarize the total anaerobic psychrotrophic (incubation at 22°C) cell count (log cfu/ml) for the different tested conditions at 12°C. The results show that the growth of bacteria in the control samples (without LPS) restarted on day 2 and reached approximately log 7 cfu/ml after 7 days at 12°C. In the samples at which 300 ppm LPS was added, no growth of the bacteria was observed after 7 days at 12°C.

Table 16: Total anaerobic psychrotrophic (incubation at 22°C) cell count (log cfu/ml) in raw milk in which LPS was added at different concentrations. After addition, the milk was stored for 4h at 7°C after which it was pasteurized (72°C for 15sec). The milk was further stored at 12°C during 7 days.

| Time(days) | Control | 300 ppm |
|---|---|---|
| 0 | 4.3 | 4.3 |
| 0 (after 4h/7°C) | 4.3 | 4.2 |
| 0 (after past.) | 1.7 | 1.7 |
| 1 | 1.6 | 1.3 |
| 2 | 2.3 | 1.4 |
| 3 | 4.2 | 0.8 |
| 5 | 6.2 | 0.5 |
| 7 | 6.8 | 0.3 |

Table 17 summarizes the cell count (log cfu/ml) of lactic acid bacteria for the different tested conditions at 12°C. The results show that the growth of bacteria in the control samples (without LPS) restarted on day 2 and reached approximately log 6.5 cfu/ml after 7 days at 12°C. In the samples at which 300 ppm LPS was added, the lactic acid bacteria restarted to grow after 7 days at 12°C.

Table 17: The cell count of lactic acid bacteria (log cfu/ml) in raw milk in which LPS was added at different concentrations. After addition, the milk was stored for 4h at 7°C after which it was pasteurized (72°C for 15sec). The milk was further stored at 12°C during 7 days.

| Time(days) | Control | 300 ppm |
|---|---|---|
| 0 | 4.3 | 4.3 |
| 0 (after 4h/7°C) | 4.3 | 4.1 |
| 0 (after past.) | 0.0 | 0.0 |
| 1 | 1.3 | 0.0 |
| 2 | 2.2 | 0.0 |
| 3 | 2.8 | 0.0 |

(continued)

| Time(days) | Control | 300 ppm |
|---|---|---|
| 5 | 5.2 | 0.0 |
| 7 | 6.6 | 0.9 |

Table 18 summarizes the cell count (log cfu/ml) of yeasts for the different tested conditions at 12°C. The results show that the yeasts were completely inactivated by the pasteurization. No further growth was observed during 7 days at 12°C.

Table 18: The cell count of yeasts (log cfu/ml) in raw milk in which LPS was added at different concentrations. After addition, the milk was stored for 4h at 7°C after which it was pasteurized (72°C for 15sec). The milk was further stored at 12°C during 7 days.

| Time(days) | Control | 300 ppm |
|---|---|---|
| 0 | 3.0 | 3.0 |
| 0 (after 4h/7°C) | 3.0 | 3.0 |
| 0 (after past.) | <1.0 | <1.0 |
| 1 | <1.0 | <1.0 |
| 2 | <1.0 | <1.0 |
| 3 | <1.0 | <1.0 |
| 5 | <1.0 | <1.0 |
| 7 | <1.0 | <1.0 |

Table 19 summarizes the cell count (log cfu/ml) of moulds for the different tested conditions at 12°C. The results show that the moulds were completely inactivated by the pasteurization. No further growth was observed during 7 days at 12°C.

Table 19: The cell count of moulds (log cfu/ml) in raw milk in which LPS was added at different concentrations. After addition, the milk was stored for 4h at 7°C after which it was pasteurized (72°C for 15sec). The milk was further stored at 12°C during 7 days.

| Time(days) | Control | 300 ppm |
|---|---|---|
| 0 | 1.3 | 1.3 |
| 0 (after 4h/7°C) | 1.5 | 1.0 |
| 0 (after past.) | <1.0 | <1.0 |
| 1 | <1.0 | <1.0 |
| 2 | <1.0 | <1.0 |
| 3 | <1.0 | <1.0 |
| 5 | <1.0 | <1.0 |
| 7 | <1.0 | <1.0 |

The results illustrate that a waiting time of 4h at 7°C between the addition of 300 ppm LPS and pasteurization is enough to have a significant shelf life extending effect of the pasteurized milk.

**EXAMPLE 8:** Antimicrobial activity of LPS added in raw milk before pasteurization (15sec/72°C) - comparison of LPS concentration

Experimental design

Fresh raw milk was divided in smaller portions and LPS was added at different concentrations (0 ppm, 100 ppm, 200 ppm, and 300 ppm). After 8 hours at 7°C the raw milk was pasteurized for 15 sec. at 72°C and cooled down in ice water. The samples were stored at 12°C. Microbial analysis was performed on day 0, day 1, day 2, day 3, day 5 and day 7.

- LPS: 0 ppm (= control), 100 ppm, 200 ppm, and 300 ppm
- fresh raw milk
- first stored 8h/7°C then pasteurized: 72°C during 15 sec.
- 7 days at 12°C

Results

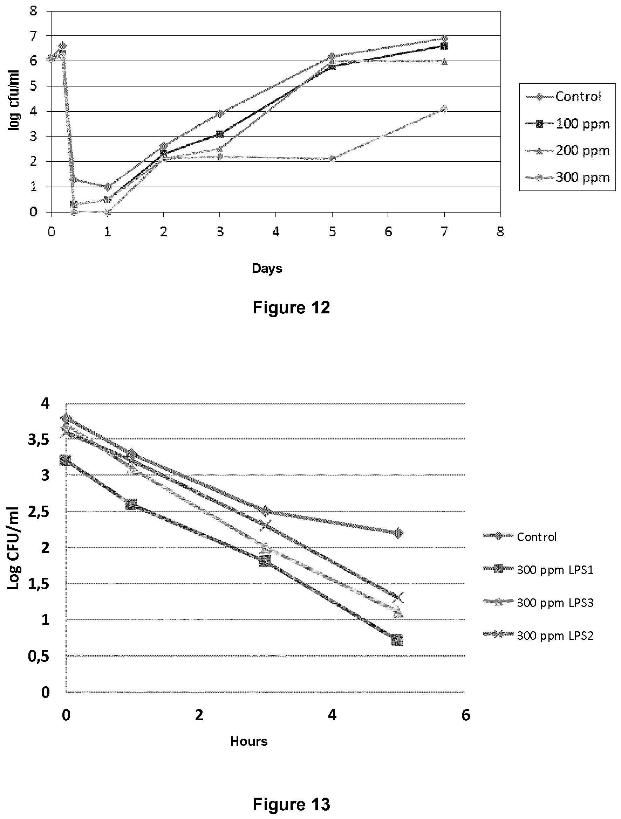

Table 20 and Figure 11 summarize the cell count (log cfu/ml) of lactic acid bacteria for the different tested conditions at 12°C. Table 21 and Figure 12 summarize the total cell count (log cfu/ml) of aerobic psychrotrophic bacteria for the different tested conditions at 12°C. The results show that the growth of lactic acid bacteria in the control samples (without LPS) restarted after 3 days and reached approximately log 7 cfu/ml after 7 days at 12°C. In the samples with LPS 100 ppm and in the samples with LPS 200 ppm restarted the growth of bacteria on day 5 and reached approximately log 6 cfu/ml for LPS 100 ppm and approximately log 8 cfu/ml for LPS 200 ppm after 7 days at 12°C. In the samples at which 300 ppm LPS was added, the lactic acid bacteria restarted to grow after 7 days at 12°C. A similar trend can be seen for the aerobic psychrotrophic bacteria, i.e. a lower reduction of cell count in the control sample as well as a faster bacterial growth after pasteurization and higher final bacterial cell counts in the control sample compared to the LPS treated samples.

Table 20: The cell count of lactic acid bacteria (log cfu/ml) in raw milk in which LPS was added at different concentrations. After addition, the milk was stored for 8h at 7°C after which it was pasteurized (72°C for 15sec). The milk was further stored at 12°C during 7 days.

| Time(days) | Control | 100 ppm | 200 ppm | 300 ppm |
|---|---|---|---|---|
| 0 | 4.3 | 4.3 | 4.3 | 4.3 |
| 0 (after 8h/7°C) | 4.3 | 4.3 | 4.4 | 4.4 |
| 0 (after past.) | 1.3 | 0 | 0.3 | 0.0 |
| 1 | 0 | 0.5 | ND* | 0.0 |
| 2 | 1.7 | 0.8 | 0.7 | 0.5 |
| 3 | 2.4 | 0.7 | 1.7 | ND* |
| 5 | 5.8 | 5.3 | 7.3 | 0.0 |
| 7 | 6.7 | 5.9 | 7.8 | 3.7 |
| *: no data available | | | | |

Table 21: The total cell count of aerobic psychrotrophic bacteria (log cfu/ml) in raw milk in which LPS was added at different concentrations. After addition, the milk was stored for 8h at 7°C after which it was pasteurized (72°C for 15sec). The milk was further stored at 12°C during 7 days.

| Time(days) | Control | 100 ppm | 200 ppm | 300 ppm |
|---|---|---|---|---|
| 0 | 6.1 | 6.1 | 6.1 | 6.1 |
| 0 (after 8h/7°C) | 6.6 | 6.3 | 6.3 | 6.2 |
| 0 (after past.) | 1.3 | 0.3 | 0.3 | 0 |

(continued)

| Time(days) | Control | 100 ppm | 200 ppm | 300 ppm |
|---|---|---|---|---|
| 1 | 1 | 0.5 | 0.5 | 0 |
| 2 | 2.6 | 2.3 | 2.1 | 2.1 |
| 3 | 3.9 | 3.1 | 2.5 | 2.2 |
| 5 | 6.2 | 5.8 | 6 | 2.1 |
| 7 | 6.9 | 6.6 | 6 | 4.1 |

The results illustrate that adding 300 ppm LPS before pasteurization and with an intermediate storage of 8h at 7°C, did prolong the shelf life at 12°C of the pasteurized milk significantly. Smaller amount of LPS added (100-200 ppm) had an intermediate effect on this shelf life.

**EXAMPLE 9:** Antimicrobial activity of LPS added in raw milk before pasteurization (different temperatures)

Experimental design

Fresh raw milk was divided in smaller portions and LPS was added at a concentration of 300 ppm. After 6 hours at 7°C the raw milk was pasteurized for 15 sec. at different temperatures ranging from 54°C to 72°C and cooled down in ice water. To separate the effect of prior LPS incubation from the effect of subsequent heat treatment, and hence to investigate synergistic effects of LPS treatment and heat treatment, the total bacterial count after LPS treatment and before heat treatment was adjusted (normalized) to 6.4 log(cfu)/ml. Microbial analysis was performed immediately after pasteurization.

- LPS: 0 ppm (= control), and 300 ppm
- fresh raw milk
- first stored 8h/7°C then pasteurized: 72°C during 15 sec.
- 7 days at 12°C

LPS composition:

- GOD: 0.75 wt%
- LP: 1.25 wt%
- SCN: 5 wt%
- Glucose: 30 wt%

Results

Table 22 summarizes the total cell count (log cfu/ml) of the milk immediately after pasteurization at different temperatures, in which LPS treatment (300 ppm) and control treatment (0 ppm) is compared.

Table 22: The total cell count (log cfu/ml) in raw milk in which 0 ppm or 300 ppm LPS was added. After addition, the milk was stored for 6h at 7°C after which a sample containing 6.4 log cfu/ml total bacteria was pasteurized (15sec at indicated temperatures). Total cell count was measured immediately after pasteurization.

| °C | Control | 300 ppm |
|---|---|---|
| 54 | 6.3 | 5.7 |
| 57 | 6.0 | 5.6 |
| 60 | 5.9 | 5.1 |
| 63 | 5.5 | 3.9 |
| 66 | 5.0 | 3.7 |
| 69 | 3.9 | 3.1 |

(continued)

| °C | Control | 300 ppm |
|---|---|---|
| 72 | 2.0 | 1.2 |

From Table 22 it is clear that independently of the pasteurization temperature, the total cell count in the LPS treated samples was lower than the total LPS count in the control samples, while the same amount of bacteria (6.4 log cfu/ml) was subjected to the heat treatment. These results clearly demonstrate the influence of prior LPS treatment on subsequent heat treatment, as heat treatment after prior LPS treatment resulted in a lower cell count compared to heat treatment of the same amount of staring bacteria (6.4 log cfu/ml) without prior LPS treatment. Hence, LPS treatment and heat treatment synergistically affect microbial survival.

**EXAMPLE 10:** Antimicrobial activity of LPS in whole liquid egg inoculated with *Salmonella* spp.

Experimental design

Whole liquid egg was divided in smaller portions and was inoculated with a cocktail of Salmonella strains (LMG 10395 and LMG 10396) at a level of 7500 cfu/ml. The following LPS compositions were added at a concentration of 300 ppm.

- LPS1: 0.75 wt% GOD; 1.25 wt% LP; 5 wt% SCN; 30 wt% glucose
- LPS2: 0.75 wt% GOD; 1.25 wt% LP; 1.7 wt% SCN; 20 wt% glucose
- LPS3: 1.7 wt% GOD; 0.04 wt% LP; 1.7 wt% SCN; 0 wt% glucose

After 8 hours at 7°C the whole liquid egg was pasteurized for 1 min., 3 min. and 5 min. at 55°C and cooled down in ice water. The samples were analysed immediately after the heat treatment.

- LPS1: 0 ppm (= control), 300 ppm
- LPS2: 0 pm (= control), 300 ppm
- LPS3: 0 ppm (= control), 300 ppm
- whole liquid egg
- first stored 8h/7°C then pasteurized: 55°C during 1 min, 3 min, 5 min
- *Salmonella enteritidis* (LMG 10395) and *Salmonella typhymurium* (LMG 10396)

Results

Table 23 and Figure 13 summarize the cell count (log cfu/ml) of lactic acid bacteria for the different tested conditions. The results show that in the egg samples where LPS was added, the inhibition of *Salmonella* spp. is more effective than in the egg samples without LPS.

Table 23: Effect of LPS on the cell count (log cfu/ml) of *Salmonella* spp. in whole liquid egg stored for 8h at 7°C and then pasteurized at 55°C.

| Time(min) | Control | 300 ppm LPS1 | 300 ppm LPS3 | 300 ppm LPS2 |
|---|---|---|---|---|
| 0(after 8h/7°C) | 3.8 | 3.2 | 3.7 | 3.6 |
| 1 | 3.3 | 2.6 | 3.1 | 3.2 |
| 3 | 2.5 | 2.0 | 2.0 | 2.3 |
| 5 | 2.2 | 0.7 | 1.1 | 1.7 |

The results illustrate that LPS increased the heat inactivation of Salmonella spp. in liquid whole egg when applied before the pasteurization. The effect was most pronounced with LPS1 and after a pasteurization of 5 minutes at 55°C when compared with shorter pasteurization times at the same temperature.

**EXAMPLE 11:** Antimicrobial activity of LPS in surimi salad

Experimental design

Homemade surimi salad was divided in smaller portions and was inoculated with a cocktail of lactic acid bacteria at an inoculation level of 1000 cfu/g. LPS was added to the surimi salad at different concentrations (0 ppm, 150 ppm, 300 ppm) and the surimi salad was stored at 7°C for 6 weeks in air conditions. The samples were analyzed on day 0, week 1, week 2, week 3, week 4, week 5 and week 6.

- LPS: 0 ppm (= control), 150 ppm, 300 ppm
- homemade surimi salad
- lactic acid bacteria: Lactobacillus plantarum (FF595, isolated from salmon salad) Lactobacillus brevis (FF662, isolated from meat salad) Lactococcus lactis ssp lactis 2 (FF649, isolated from egg-chive salad)
- 7°C (6 weeks)

Results

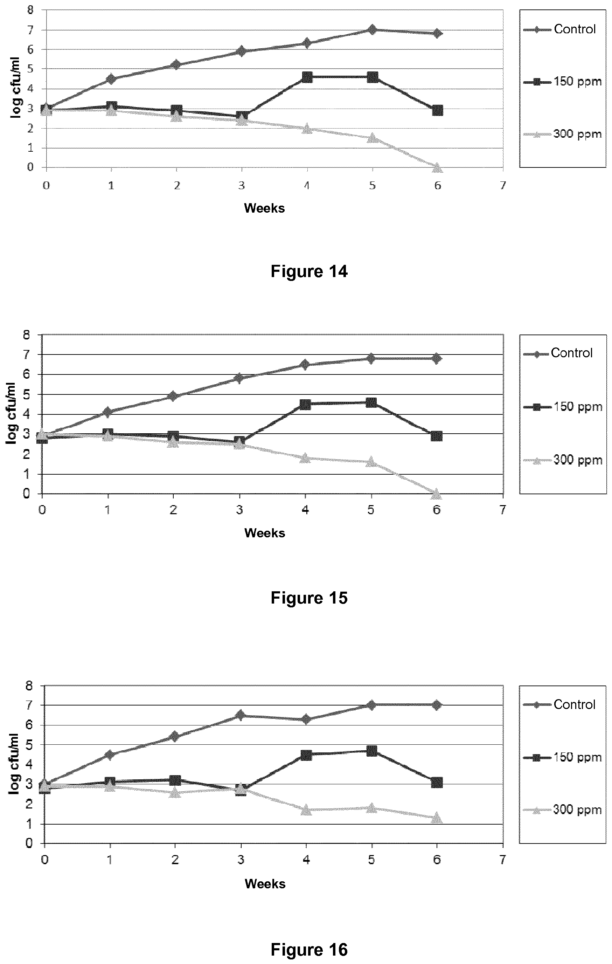

Table 24-26 and Figures 14-16 summarize respectively the total aerobic psychrotrophic (incubation at 22°C) cell count (log cfu/g), the total anaerobic psychrotrophic (incubation at 22°C) cell count (log cfu/g) and the cell count (log cfu/g) of lactic acid bacteria (incubation at 22°C) for the different tested conditions. The results show that the growth in the control (0 ppm) started immediately and reached approximately 7 log cfu/g after 5 weeks. In the samples with 150 ppm LPS a more limited growth of bacteria (approximately 4.5 log cfu/g) was observed while in the samples with 300 ppm LPS an inactivation of the bacteria was observed during storage.

Table 24: Effect of LPS on the total aerobic psychrotrophic cell count (log cfu/ml; incubation at 22°C) in surimi salad, inoculated with lactic acid bacteria, stored at 7°C.

| Time (weeks) | Control | 150 ppm | 300 ppm |
|---|---|---|---|
| 0 (before inoculation) | 1.0 | 1.8 | 1.5 |
| 0 (after inoculation) | 3.0 | 2.9 | 2.9 |
| 1 | 4.5 | 3.1 | 2.9 |
| 2 | 5.2 | 2.9 | 2.6 |
| 3 | 5.9 | 2.6 | 2.4 |
| 4 | 6.3 | 4.6 | 2.0 |
| 5 | 7.0 | 4.6 | 1.5 |
| 6 | 6.8 | 2.9 | <1.0 |

Table 25: Effect of LPS on the total anaerobic psychrotrophic cell count (log cfu/ml; incubation at 22°C) in surimi salad, inoculated with lactic acid bacteria, stored at 7°C.

| Time (weeks) | Control | 150 ppm | 300 ppm |
|---|---|---|---|
| 0 (before inoculation) | <1.0 | <1.0 | <1.0 |
| 0 (after inoculation) | 2.9 | 2.8 | 3.0 |
| 1 | 4.1 | 3.0 | 2.9 |
| 2 | 4.9 | 2.9 | 2.6 |
| 3 | 5.8 | 2.6 | 2.5 |
| 4 | 6.5 | 4.5 | 1.8 |
| 5 | 6.8 | 4.6 | 1.6 |
| 6 | 6.8 | 2.9 | <1.0 |

Table 26: Effect of LPS on the cell count (log cfu/ml) of lactic acid bacteria (incubation at 22°C) in surimi salad, inoculated with lactic acid bacteria, stored at 7°C

| Time (weeks) | Control | 150 ppm | 300 ppm |
|---|---|---|---|
| 0 (before inoculation) | <1.0 | <1.0 | <1.0 |
| 0 (after inoculation) | 3.0 | 2.8 | 2.9 |
| 1 | 4.5 | 3.1 | 2.9 |
| 2 | 5.4 | 3.2 | 2.6 |
| 3 | 6.5 | 2.7 | 2.8 |
| 4 | 6.3 | 4.5 | 1.7 |
| 5 | 7.0 | 4.7 | 1.8 |
| 6 | 7.0 | 3.1 | 1.3 |

The results clearly demonstrate the potential of LPS to inhibit the growth of lactic acid bacteria in sauce based salads. 150 ppm of LPS prevented the outgrowth of lactic acid bacteria while 300 ppm LPS even inhibited the lactic acid bacteria during storage at 7°C.

**EXAMPLE 12:** Taste test on drinking yoghurt with and without LPS

Experimental design

In a triangle test, drinking yoghurt (60% water ,40% yoghurt (skimmed natural yoghurt) and 1%salt) with 300 ppm LPS was compared to drinking yoghurt without LPS (control). A LPS solution was added to the drinking yoghurt, a same amount of sterile water was added to the control. Both samples were stored at 10°C for 3 weeks. The samples were tasted on day 0 (1 hours after mixing), week 2 and week 3.

Results

Day 0: The panel consisted of 10 persons. Of these 10 persons only 3 persons made the correct distinction between both products. There was no significant sensory perceptible difference. The panel members found all the samples acceptable and there was no significant preference.
Week 2: The panel consisted of 11 persons. Of these 11 persons 8 persons made the correct distinction between both products, this is a significance level of 0.01. Two members of the panel had a preference for the LPS sample.
Week 3: The panel consisted of 14 persons. Of these 14 persons 9 persons made the correct distinction between both products, this is a significance level of 0.05. Four members of the panel had a preference for the LPS sample.
These results indicate that with time, more people tend to distinguish the products with or without LPS. While no preference was given for products with or without LPS at day 0, after two weeks, and even more so after three weeks, more people develop a preference for products with LPS.

**EXAMPLE 13:** Taste test on fresh semi-skimmed with and without LPS

Experimental design

In a triangle test fresh semi skimmed cheese with 300 ppm LPS was compared to fresh semi skimmed cheese without LPS (control). A LPS solution was added to the fresh semi skimmed cheese, a same amount of sterile water was added to the control. Both samples were stored at 10°C for 14 days. The samples were tasted on day 0 (2 hours after mixing), day 7 and day 14.

Results

Day 0: The panel consist of 15 persons. Of these 15 persons 7 persons made the correct distinction between both products. The panel members found all the samples acceptable and there was no significant preference.
Day 7: The panel consist of 15 persons. Of these 15 persons 6 persons made the correct distinction between both products. One member of the panel had a preference for the LPS containing sample.

Day 14: The panel consist of 15 persons. Of these 15 persons 6 persons made the correct distinction between both products. Two members of the panel had a preference for the LPS containing sample.

These results indicate that while no preference was given for products with or without LPS at day 0, after two weeks, and even more so after three weeks, more people develop a preference for products with LPS.

**EXAMPLE 14:** Organoleptic evaluation of whole liquid egg treated with different LPS compositions

Experimental design

A sensory analysis (Triangle test; ISO-4120:2004) was performed on pasteurized liquid whole egg which was treated with three different LPS compositions (each at 300 ppm). Color and smell was analysed and compared to untreated samples (blanco).

- LPS1 : 2.5 wt% GOD / 1.25 wt% LP / 7.5 wt% SCN, and 30 wt% glucose (not according to the invention)
- LPS2 : 0.75 wt% GOD / 1.25 wt% LP / 1.7 wt% SCN, and 20 wt% glucose (according to the invention)
- LPS3 : 1.7 wt% GOD / 0.06 wt% LP / 1.7 wt% SCN, and 0 wt% glucose (according to the invention)

Samples were stored at 10°C up to 14 days and evaluated intermittently during this period.

Results

Day 0 : panel of 10 people; 2 people distinguished correctly between the differently treated products; no significant sensory differences were attributed between the differently treated products.

Day 7 : panel of 10 people :

- Blanco versus LPS1 : 10 people distinguished correctly between blanco and LPS1; LPS1 was perceived as having a paler color and a strong oxidative smell compared to blanco.
- Blanco versus LPS2 : 3 people distinguished correctly between blanco and LPS2; no significant differences were found; all sensory characteristics were found acceptable.
- Blanco versus LPS3 : 2 people distinguished correctly between blanco and LPS2; no significant differences were found; all sensory characteristics were found acceptable.

Day 14 : panel of 10 people :

- Blanco versus LPS1 : same results as day 7, but more pronounced; LPS1 was found completely unacceptable.
- Blanco versus LPS2: 4 people distinguished correctly between blanco and LPS2, 2 people has a preference for LPS2 treated sample, all sensory characteristics were found acceptable.
- Blanco versus LPS3 : same results as day 7

These results indicate that LPS compositions not according to the invention, such as LPS compositions having higher GOD or SCN concentrations, detrimentally affect sensory characteristics over time, up to the point that the treated food product is perceived to have unacceptable sensory characteristics.

**EXAMPLE 15:** Determination of LP activity

Reagents

Sodium citrate buffer, 50 mM, pH5.0
Sodium chloride 0.9 wt/vol%
Hydrogen peroxide 0.3 vol/vol%
Substrate solution: ABTS 1 mM (in 100 $\mu$l 0.3 vol/vol% hydrogen peroxide supplemented with sodium citrate buffer to 100 ml)

Procedure

Dissolve 25 mg LP (Amano) to 10 ml 0.9 wt/vol% NaCl; dilute 100 μl with 0.9 wt/vol% NaCl to 100 ml; add 100 μl to 2 ml preheated (37°C) substrate solution in cuvette (d = 10 mm). Read absorbance after 30s (Abs30) and after 90s (Abs90).

Calculate activity (U/mg):

$$\text{LP activity (U/mg)} = ((\text{Abs90} - \text{Abs30}) \times \text{dilution factor} \times 25)/(2.1 \times 0.1 \times 2.5 \times \text{weight in mg}) = 47619 \times (\text{Abs90} - \text{Abs30})/\text{weight in mg}$$

**EXAMPLE 16:** Determination of GOD activity

Reagents

A. Aminoantipyrine solution (4 mg/ml in deionised water)
B. Triton X-100 solution (50 mg/ml in deionised water)
C. Phenol solution (50 mg/ml in deionised solution)
D. Peroxidase solution (250 purpurogallin units of peroxidase (LP, Amano) in 10 ml of deionised water)
E. Phosphate buffer 0.1 M ($KH_2PO_4$-NaOH, pH 7.0)
F. Phenol buffer solution (0.1 M $KH_2PO_4$ containing 3 ml phenol solution and 3 ml Triton X-100 solution per 100 ml final solution and adjusted to pH 7.0 with Na OH)
G. Substrate solution (2.5 g D-glucose/25 ml in deionised water)
H. Enzyme solution approximately 50 mg GOD (Amano) in 0.1 phosphate buffer E (such that value of ΔOD/minute is 0.030 +/- 0.005.

Procedure

Combine 2.0 ml F + 0.5 ml G + 0.5 ml D + 0.1 ml A and preheat to 37°C in cuvette (d = 10 mm)
Add 0.1 ml H, mix and maintain at 37°C or add 0.1 ml E for blanco
Measure absorbance after 2 and 5 minutes at 500 nm

Calculate activity (U/mg)

$$\text{GOD activity (U/mg)} = ((\text{A5} - \text{A2}) - (\text{Ab5} - \text{Ab2})/3) \times (1/(12.88 \times 1/2)) \times 3.2 \times (\text{Dm}/0.1) \times 1.339,$$

wherein

A5 and A2 = absorbance of GOD containing reaction after 5 and 2 minutes respectively
Ab5 and Ab2 = absorbance of blanco reaction after 5 and 2 minutes respectively
Dm = dilution multiple of solution H (emzyme solution)

**Claims**

**1.** Composition comprising :

(i) 1125-31875 U /100 g glucose oxidase (GOD), preferably 1500-25500 U/100 g GOD;
(ii) 30000-1562500 U /100 g lactoperoxidase (LP), preferably 40000-1250000 U/100 g LP;
(iii) 1.275-6.25 wt% thiocyanate (SCN), preferably 1.7-5.0 wt% SCN; and
(iv) up to 37.5 wt% glucose, preferably up to 30 wt% glucose.

2. Composition according to claim 1, comprising 0.075-2.125 wt% GOD, preferably 0.1-1.7 wt% GOD, and 0.03-1.57 wt% LP, preferably 0.04-1.25 wt% LP.

3. Composition according to claim 1 or 2, comprising at least 0.5 wt% glucose.

4. Composition according to any of claims 1 to 3, which is a dry composition, preferably a powder.

5. Composition according to any of claims 1 to 4, which is an edible composition.

6. Use of the composition according to any of claims 1 to 5 as food preservative.

7. Use according to claim 6, wherein said food is selected from dairy products, fruit and vegetable juices, sauces, dressings, pastes, egg products, cheeses, and salads.

8. Food product comprising the composition according to any of claims 1 to 5, wherein said food product is preferably selected from dairy products, fruit and vegetable juices, sauces, dressings, pastes, egg products, cheeses, and salads.

9. Food product according to claim 8, comprising 50-400 ppm of the composition according to any of claims 1 to 5, preferably 250-350 ppm, most preferably 300 ppm.

10. Food product according to claim 8 or 9, having added per 100 g of said food product:

(i) 0.056-12.75 U GOD, preferably 0.45-7.65 U GOD;
(ii) 1.5-625 U LP, preferably 12-375 U LP;
(iii) 0.063-2.5 mg SCN-, preferably 0.51-1.5 mg SCN-; and
(iv) 0-15 mg glucose, preferably 0-9 mg glucose.

11. Food product according to any of claims 8 to 10, having added per 100 g of said food product 0.0037-0.85 mg GOD, preferably 0.03-0.51 mg GOD, and 0.0015-0.625 mg LP, preferably 0.012-0.375 mg LP.

12. Method for preserving a food product, comprising adding 50-400 ppm, preferably 250-350 ppm, most preferably 300 ppm of the composition according to any of claims 1 to 5 to a food product or a constituent of a food product.

13. Method according to claim 12, comprising adding 50-400 ppm, preferably 250-350 ppm, most preferably 300 ppm of the composition according to any of claims 1 to 5 to a food product or a constituent of a food product and subjecting said food product or said constituent to heat treatment after between 1 to 12 hours, preferably after between 4 to 8 hours.

14. Method according to claim 13, wherein said heat treatment is pasteurization.

15. Method according to any of claims 12 to 14, wherein said food product is selected from dairy products, fruit and vegetable juices, sauces, dressings, pastes, egg products, cheeses, and salads.

**Patentansprüche**

1. Zusammensetzung, umfassend:

(i) 1125-31875 U/100 g Glucoseoxidase (GOD), vorzugsweise 1500-25500 U/100 g GOD;
(ii) 30000-1562500 U/100 g Lactoperoxidase (LP), vorzugsweise 40000-1250000 U/100 g LP;
(iii) 1,275-6,25 Gew.-% Thiocyanat (SCN), vorzugsweise 1,7-5,0 Gew.-% SCN; und
(iv) bis zu 37,5 Gew.-% Glucose, vorzugsweise bis zu 30 Gew.-% Glucose.

**2.** Zusammensetzung gemäß Anspruch 1, umfassend 0,075-2,125 Gew.-% GOD, vorzugsweise 0,1-1,7 Gew.-% GOD, und 0,03-1,57 Gew.-% LP, vorzugsweise 0,04-1,25 Gew.-% LP.

**3.** Zusammensetzung gemäß Anspruch 1 oder 2, umfassend wenigstens 0,5 Gew.-% Glucose.

**4.** Zusammensetzung gemäß einem der Ansprüche 1 bis 3, die eine trockene Zusammensetzung ist, vorzugsweise ein Pulver.

**5.** Zusammensetzung gemäß einem der Ansprüche 1 bis 4, die eine essbare Zusammensetzung ist.

**6.** Verwendung der Zusammensetzung gemäß einem der Ansprüche 1 bis 5 als Lebensmittel-Konservierungsmittel.

**7.** Verwendung gemäß Anspruch 6, wobei das Lebensmittel ausgewählt ist aus Milchprodukten, Frucht- und Gemüsesäften, Saucen, Dressings, Pasten, Eiprodukten, Käse und Salaten.

**8.** Lebensmittelprodukt, umfassend die Zusammensetzung gemäß einem der Ansprüche 1 bis 5, wobei das Lebensmittelprodukt vorzugsweise ausgewählt ist aus Milchprodukten, Frucht- und Gemüsesäften, Saucen, Dressings, Pasten, Eiprodukten, Käse und Salaten.

**9.** Lebensmittelprodukt gemäß Anspruch 8, umfassend 50-400 ppm der Zusammensetzung gemäß einem der Ansprüche 1 bis 5, vorzugsweise 250-350 ppm, höchst bevorzugt 300 ppm.

**10.** Lebensmittelprodukt gemäß Anspruch 8 oder 9, das pro 100 g des Lebensmittelprodukts zugegeben aufweist:

     (i) 0,056-12,75 U GOD, vorzugsweise 0,45-7,65 U GOD;
     (ii) 1,5-625 U LP, vorzugsweise 12-375 U LP;
     (iii) 0,063-2,5 mg SCN-, vorzugsweise 0,51-1,5 mg SCN-; und
     (iv) 0-15 mg Glucose, vorzugsweise 0-9 mg Glucose.

**11.** Lebensmittelprodukt gemäß einem der Ansprüche 8 bis 10, das pro 100 g des Lebensmittelprodukts 0,0037-0,85 mg GOD, vorzugsweise 0,03-0,51 mg GOD, und 0,0015-0,625 mg LP, vorzugsweise 0,012-0,375 mg LP, zugegeben aufweist.

**12.** Verfahren zum Konservieren eines Lebensmittelprodukts, umfassend Zugeben von 50-400 ppm, vorzugsweise 250-350 ppm, höchst bevorzugt 300 ppm, der Zusammensetzung gemäß einem der Ansprüche 1 bis 5 zu einem Lebensmittelprodukt oder einem Bestandteil eines Lebensmittelprodukts.

**13.** Verfahren gemäß Anspruch 12, umfassend Zugeben von 50-400 ppm, vorzugsweise 250-350 ppm, höchst bevorzugt 300 ppm, der Zusammensetzung gemäß einem der Ansprüche 1 bis 5 zu einem Lebensmittelprodukt oder einem Bestandteil eines Lebensmittelprodukts und Unterwerfen des Lebensmittelprodukts oder des Bestandteils an Wärmebehandlung nach zwischen 1 bis 12 Stunden, vorzugsweise nach zwischen 4 bis 8 Stunden.

**14.** Verfahren gemäß Anspruch 13, wobei die Wärmebehandlung Pasteurisierung ist.

**15.** Verfahren gemäß einem der Ansprüche 12 bis 14, wobei das Lebensmittelprodukt ausgewählt ist aus Milchprodukten, Frucht- und Gemüsesäften, Saucen, Dressings, Pasten, Eiprodukten, Käse und Salaten.

**Revendications**

**1.** Composition comprenant :

     (i) 1125-31 875 U/100 g de glucose oxydase (GOD), préférablement 1500-25 500 U/100 g de GOD ;
     (ii) 30 000-1 562 500 U/100 g de lactoperoxydase (LP), préférablement 40 000-1 250 000 U/100 g de LP ;
     (iii) 1,275-6,25% en poids de thiocyanate (SCN), préférablement 1,7-5,0% en poids de SCN ; et
     (iv) jusqu'à 37,5% en poids de glucose, préférablement jusqu'à 30% en poids de glucose.

**2.** Composition selon la revendication 1, comprenant 0,075-2,125% en poids de GOD, préférablement 0,1-1,7% en poids de GOD, et 0,03-1,57% en poids de LP, préférablement 0,04-1,25% en poids de LP.

3. Composition selon la revendication 1 ou 2, comprenant au moins 0,5% en poids de glucose.

4. Composition selon l'une quelconque des revendications 1 à 3, qui est une composition sèche, préférablement une poudre.

5. Composition selon l'une quelconque des revendications 1 à 4, qui est une composition comestible.

6. Utilisation de la composition selon l'une quelconque des revendications 1 à 5, comme conservateur alimentaire.

7. Utilisation selon la revendication 6, dans laquelle ledit aliment est choisi parmi les produits laitiers, les jus de fruits et de légumes, les sauces, les sauces pour salades, les pâtes, les produits à base d'oeufs, les fromages et les salades.

8. Produit alimentaire comprenant la composition selon l'une quelconque des revendications 1 à 5, où ledit produit alimentaire est choisi de préférence parmi les produits laitiers, les jus de fruits et de légumes, les sauces, les sauces pour salades, les pâtes, les produits à base d'oeufs, les fromages et les salades.

9. Produit alimentaire selon la revendication 8, comprenant 50-400 ppm de la composition selon l'une quelconque des revendications 1 à 5, préférablement 250-350 ppm, tout préférablement 300 ppm.

10. Produit alimentaire selon la revendication 8 ou 9, ayant, pour 100 g dudit produit alimentaire, une addition de

   (i) 0,056-12,75 U de GOD, préférablement 0,45-7,65 U de GOD ;
   (ii) 1,5-625 U de LP, préférablement 12-375 U de LP ;
   (iii) 0,063-2,5 mg de SCN-, préférablement 0,51-1,5 mg de SCN- ; et
   (iv) 0-15 mg de glucose, préférablement 0-9 mg de glucose.

11. Produit alimentaire selon l'une quelconque des revendications 8 à 10, ayant, pour 100 g dudit produit alimentaire, une addition de 0,0037-0,85 mg de GOD, préférablement de 0,03-0,51 mg de GOD, et de 0,0015-0,625 mg de LP, préférablement de 0,012-0,375 mg de LP.

12. Méthode de conservation d'un produit alimentaire, comprenant l'addition de 50-400 ppm, préférablement de 250-350 ppm, tout préférablement de 300 ppm de la composition selon l'une quelconque des revendications 1 à 5 à un produit alimentaire ou un constituant d'un produit alimentaire.

13. Méthode selon la revendication 12, comprenant l'addition de 50-400 ppm, préférablement de 250-350 ppm, tout préférablement de 300 ppm de la composition selon l'une quelconque des revendications 1 à 5 à un produit alimentaire ou un constituant d'un produit alimentaire, et la soumission dudit produit alimentaire ou dudit constituant à un traitement thermique après d'environ 1 à 12 heures, préférablement après d'environ 4 à 8 heures.

14. Méthode selon la revendication 13, où ledit traitement thermique est une pasteurisation.

15. Méthode selon l'une quelconque des revendications 12 à 14, où ledit produit alimentaire est choisi parmi les produits laitiers, les jus de fruits et de légumes, les sauces, les sauces pour salades, les pâtes, les produits à base d'oeufs, les fromages et les salades.

Figure 1

Figure 2

**Figure 3**

**Figure 4**

Figure 5

Figure 6

**Figure 7**

**Figure 8**

Figure 9

Figure 10

Figure 11

**Figure 12**

**Figure 13**

**Figure 14**

**Figure 15**

**Figure 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1468405 A
- US 5747078 A
- EP 0518445 A
- US 5085873 A
- WO 0069267 A
- FR 2709401
- WO 2011116052 A
- CA 1087019
- US 5206156 A
- WO 9111105 A

**Non-patent literature cited in the description**

- **EARNSHAW et al.** *Food Microbiology,* vol. 6 (4), 285
- **POPPER et al.** *Nahrung,* vol. 41 (1), 29-33
- **GRIEVE.** *J Veterinary Medicine,* vol. 39 (7), 537-45
- **DIONYSIUS et al.** *J Applied Bacteriology,* vol. 72 (2), 146-53
- **ISHIDO et al.** *Milchwissenschaft,* vol. 66 (1), 76-80
- **BJOERCK et al.** *Applied Microbiology,* vol. 30 (2), 199-204
- Technical guidance document on shelf-life studies for Listeria monocytogenes in ready-to-eat foods. EU CRL Listeria. BELAC accreditated laboratory, November 2008